# EUROPEAN PATENT APPLICATION

(11) **EP 1 630 692 A1**
(43) Date of publication of application: **01.03.2006**
(21) Application number: 04733973.4
(22) Date of filing: 19.05.2004
(51) Int. Cl.: G06F 17/30

(54) **METHOD FOR PROCESSING INFORMATION, APPARATUS THEREFOR AND PROGRAM THEREFOR**

(30) Priority: 19.05.2003 JP 2003139887
(71) Applicant: Saora Kabushiki Kaisha, Yokohama-Shi, Kanagawa 230-0077 (JP)
(72) Inventor: SUDA, Aruna Rohra, Yokohama-shi, Kanagawa 230-0077 (JP); JEYACHANDRAN, Suresh, Yokohama-shi, Kanagawa 225-0014 (JP); JOSEPH, Prem Anand, Yokohama-shi, Kanagawa 225-0014 (JP)
(74) Representative: Vossius & Partner
(86) International application number: PCT/JP2004/007156
(87) International publication number: WO 2004/111877

(57) **Abstract**

A system obtains and classifies tag data such as a title or keyword embedded in each of the plurality of documents and the keywords are displayed in a tree based on a result of the classification. A view is displayed in the tree with placing the titles at the end of the tree and a selection of a title with following a keyword in the view makes a corresponding document display, thereby an objective document can be easily find out from the plurality of documents.

## Description

### FIELD OF THE INVENTION

This invention relates to an information processing method and apparatus, and a storage medium in which an information processing program is stored, more particularly a technique for easily obtaining objective information of a user from among information existing in an internet or intranet.

### BACKGROUND

In a conventional manner, if an appropriate keyword is entered, a page which contains the keyword is retrieved by using a various search engine from information exists in an internet or intranet.

However, all the pages which contain the keyword are hit and a search result may include many pages which are not the objective pages and it may be difficult to find the objective page from the search result.

The objective page cannot be included in the search result because of difference in representations of the keyword and a word in the page.

Accordingly, there is a need for determining a keyword appropriately to obtain the objective page.

### SUMMARY

An information processing method related to the present invention comprises an obtaining step of obtaining a predetermined type of tag data including respective titles corresponding to a plurality of documents; a classification step of classifying the tag data; and a menu displaying step of displaying a menu in which the tag data are displayed in a tree with placing the titles at the end of the tree and each document can be displayed in response to selection of the respective title.

An information processing apparatus related to the present invention comprises obtaining means for obtaining a predetermined type of tag data including respective titles corresponding to a plurality of documents; classification means for classifying the tag data; and menu displaying means for displaying a menu in which the tag data are displayed in a tree with placing the titles at the end of the tree and each document can be displayed in response to selection of the respective title.

An information processing program executable by a computer related to the present invention comprises obtaining means for obtaining a predetermined type of tag data including respective titles corresponding to a plurality of documents; classification means for classifying the tag data; and menu displaying means for displaying a menu in which the tag data are displayed in a tree with placing the titles at the end of the tree and each document can be displayed in response to selection of the respective title.

### BRIEF DESCRIPTION OF THE DRAWINGS

Fig. 1 is a block diagram illustrating the hardware configuration of information processing apparatus according to an embodiment of the present invention.
Fig. 2 is a block diagram illustrating a functional configuration of the first embodiment.
Fig. 3 is a flowchart of procedural steps associated with the overall process of information processing apparatus.
Fig. 4 is a flowchart of procedural steps describing initialization process.
Fig. 5 is a flowchart of procedural steps describing MAIN-PROCESSOR.
Fig. 6 is a flowchart of procedural steps describing VIEW-GENERATOR.
Fig. 7 is a flowchart of procedural steps describing the tree structure formation.
Fig. 8 is a flowchart of procedural steps associated with TERMINATE process.
Fig. 9 shows an example of the Keyword Map.
Fig. 10 shows an example of picture settings of display form.
Fig. 11 shows an example of the Site Map.
Fig. 12 shows an example of web page contents.
Fig. 13 shows an example of the keyword map for an FAQ page of a self - governing body.
Fig. 14 shows an example of the keyword map for a garbage FAQ page.
Fig. 15 shows an example of the CRM main picture.
Fig. 16 is a block diagram illustrating a functional configuration of the first embodiment.
Fig. 17 is a flowchart of procedural steps for processing acquisition of a file.
Fig. 18 is a flowchart of procedural steps for addition process to a tag array.
Fig. 19 is a flowchart of procedural steps describing SORT ITEM Settings Processing.
Fig. 20 is a flowchart of procedural steps describing OUTPUT NODE Settings Processing.
Fig. 21 is a flowchart of procedural steps describing Type Acquisition Processing (View Option).
Fig. 22 is a flowchart of procedural steps describing Variable Deletion Processing.
Fig. 23 shows an example of an input screen.
Fig. 24 shows an example of a screen for setting Options.
Fig. 25 shows an example of a screen for setting Options.
Fig. 26 shows an example of Custom View.
Fig. 27 shows an example of web page contents.
Fig. 28 shows an example of the Editor screen.
Fig. 29 shows the functional constitution of the third embodiment.
Fig. 30 is a flowchart of procedural steps describing Main Processing Of the third embodiment.
Fig. 31 shows an example of Tags Database.
Fig. 32 shows the functional constitution of the fourth embodiment.
Fig. 33 shows an example of Tag Taxonomy Knowledge Base.
Fig. 34 shows an example of the Tag Editor screen.
Fig. 35 shows an example of the Tag Chooser screen.
Fig. 36 shows the block diagram of functional constitution of the fifth embodiment.
Fig. 37 shows the functional constitution of the fifth embodiment.
Fig. 38 shows the functional constitution of the fifth embodiment.
Fig. 39 describes the management of a Multi-User environment.
Fig. 40 shows an example of Multi-User Environment Utilization.
Fig. 41 shows the functional block diagram of the Document Management System.
Fig. 42 shows the functional block diagram of the Document Management System.
Fig. 43 shows the processing picture example of the Document Management System.
Fig. 44 shows an example of the keyword map in the display screen of the Document Management System.

### DETAILED DESCRIPTION

With reference to the figures, various embodiments of the present invention will now be described in greater detail.

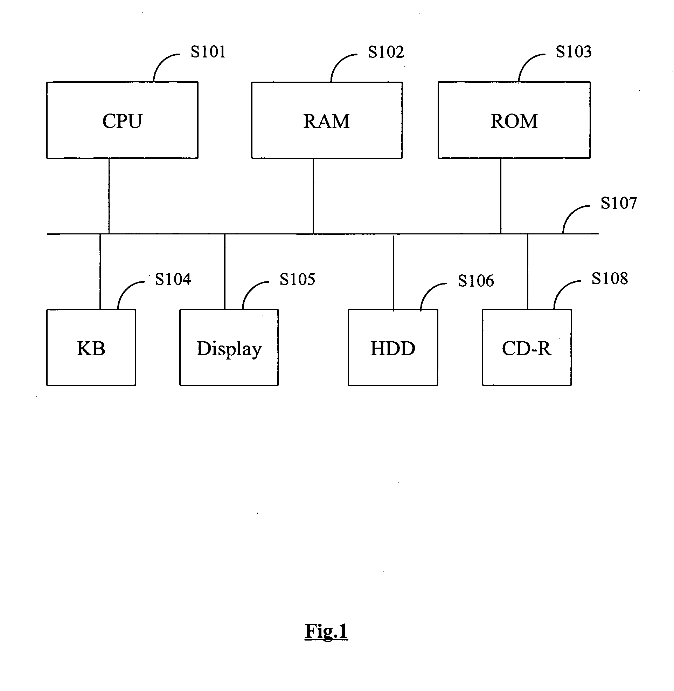

Fig. 1 is a block diagram illustrating the hardware configuration according to an embodiment of the present invention. In this figure, a central processing unit (CPU) 101 is operative to perform operations for various processing including procedural steps explained with flowcharts and further controls each composing element connected to a system bus 107.

A RAM 102 is used to temporarily store variables and intermediate data generated during the processing. A program from an external source may be loaded into the RAM 102. A ROM 103 is used to store programs, which correspond to individual flowcharts that will be described later and which are to be executed by the CPU 101, and fixed data.

A keyboard (KB) 104 is used to input data and instruction by a user. A mouse or other input devices may be used with the keyboard 104 as a pointing device to point a place on the screen. Display 105 displays data and provides user interface (UI) and a hard disk drive (HDD) 106 stores data of a database, a program, and the like permanently. Compact Disk (CD-R) 108 is used for storing and calling information from one system to another.

The system bus 107 is used to transfer an address signal indicating a composing element to be controlled by the CPU 101, a control signal used for controlling each composing element and data to be exchanged between the composing equipment.

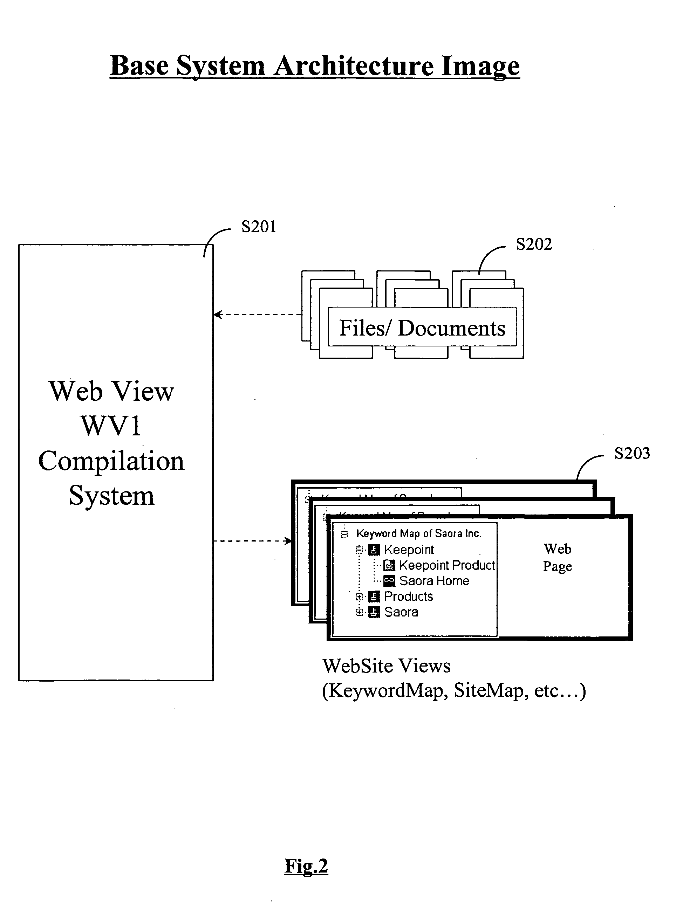

Fig. 2 gives the functional constitution of the first embodiment. It consists of a View Compilation System 201 where it acquires and classifies tag data of the title and the keyword etc embedded in the files/documents 202 and generates a view. Here a keyword is indicated in a tree type format on the basis of the taxonomic result, as shown in step 203. In this view, title of the document, which corresponds to that keyword, is indicated at the end of the tree. When the title is selected, it is able to trace the document corresponding to that keyword.

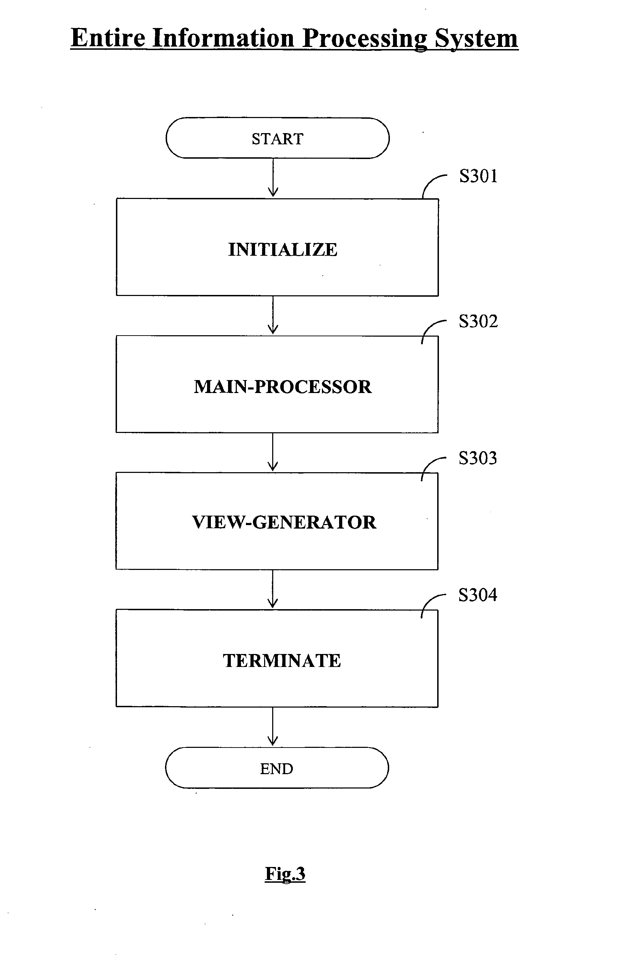

Fig. 3 is a flowchart of procedural steps associated with the complete information processing system concerning this form. In step S301, initialization of the system takes place. Then in step S302, Main-Processor carries out the relevant processing activities necessary for the system. This is then followed by the View-Generation activities in step S303 that is further followed by the termination process of the system in step S304 and the process ends.

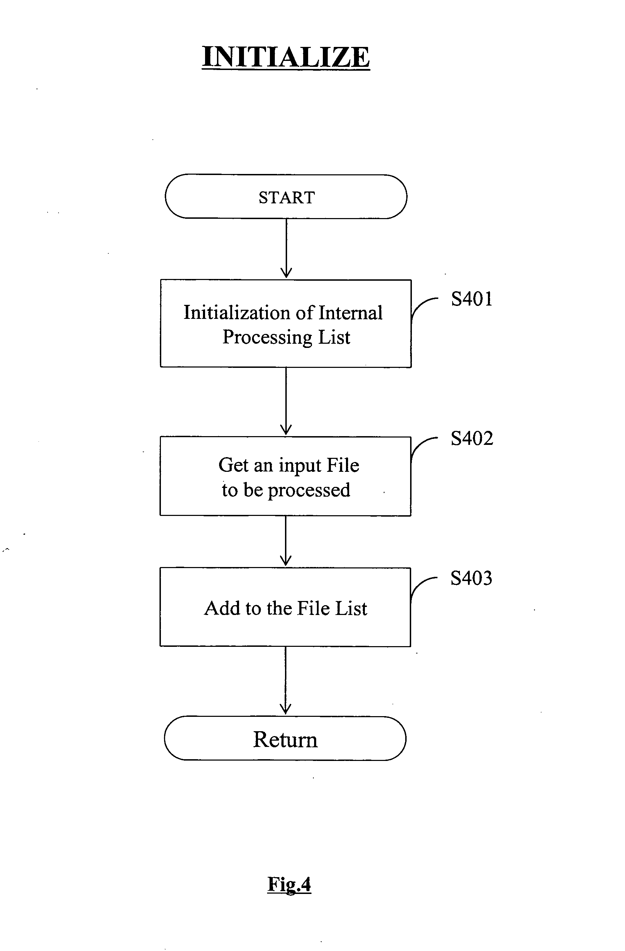

Fig. 4 is a flowchart of procedural steps describing initialization of the system. In step S401, the internal processing list and variable is initialized. This is followed by step S402 where a list of the input file that needs to be processed is acquired. In step S403, the acquired file is then added to the File List and the process ends.

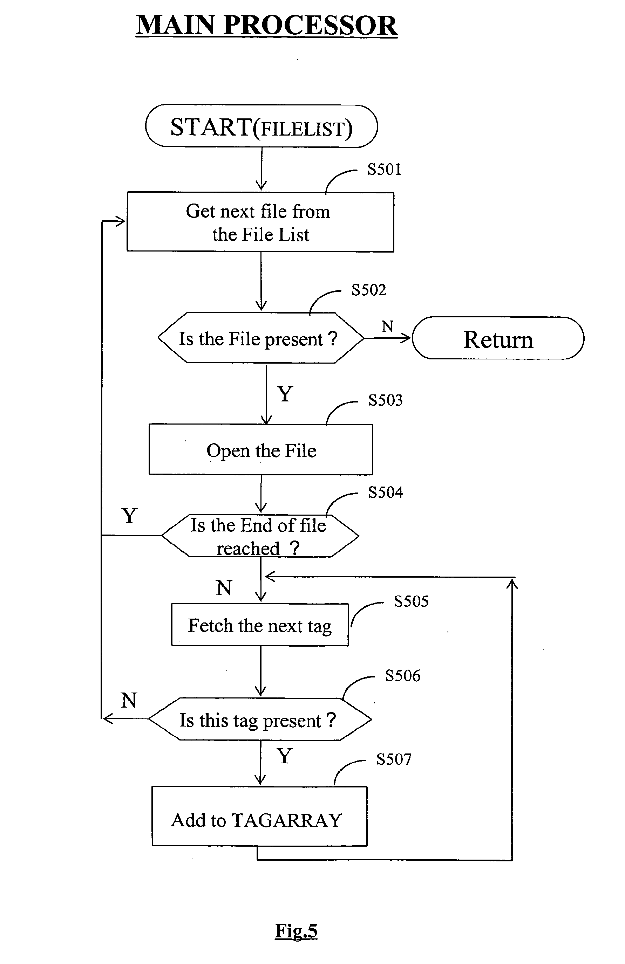

Fig. 5 is a flowchart of procedural steps describing MAIN-PROCESSOR of the system. In step S501, the next file is obtained from the file list. In step S502, a check is made to determine whether the file is present in the file list or not. If not, then the process ends; otherwise in step S503, the file is opened. Then in step S504, a check is made to determine if the end of file has been reached or not. If it has been reached, then the flow is redirected to step S501 to obtain the next file.

If, however, the end of file has not been reached, the next tag is fetched in step S505. Again a check is made in step S506 to determine whether the fetched tag is present or not. If the tag is not present, then the flow is directed to step S501 else the tag data (title and keyword) is added to the TAGARRAY and the flow is redirected to step S505.

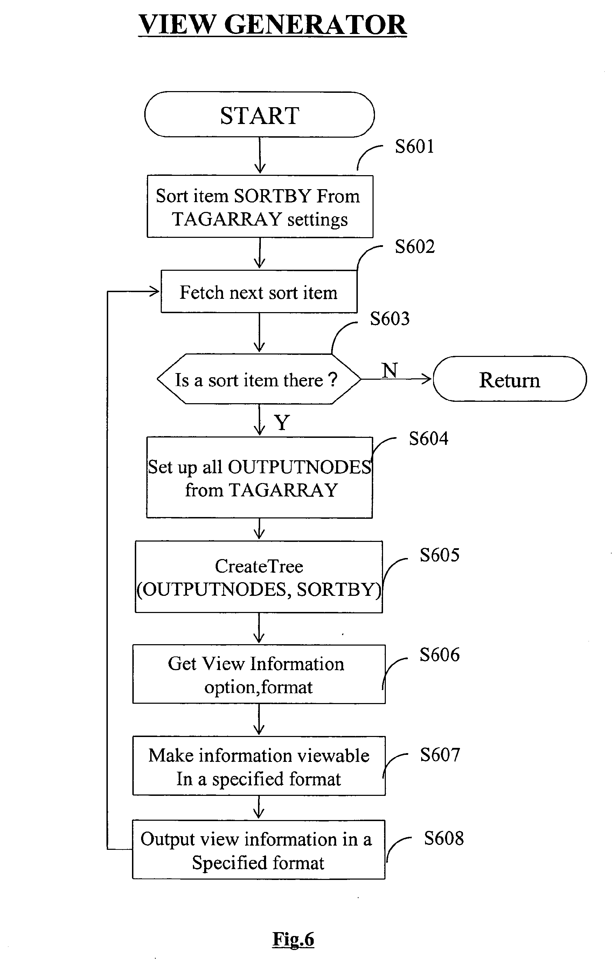

Fig.6 is a flowchart of procedural steps describing VIEW-GENERATOR of the system. In step S601, SORTBY items are sorted from the TAGARRAY settings. In step S602, the next sort item is acquired. Then in step S603, a check is made to determine whether the sort item is there or not. If the sort item is not present, then the process ends else all the OUTPUTNODES from TAGARRAY are set up in step S604.

This is then followed by step S605 where a tree like structure of the nodes is created using a CreateTree function. In step S606, format and option is acquired to display the information and then the information is displayed in the specified option in step S607. User then finally views the formatted information in step S608.

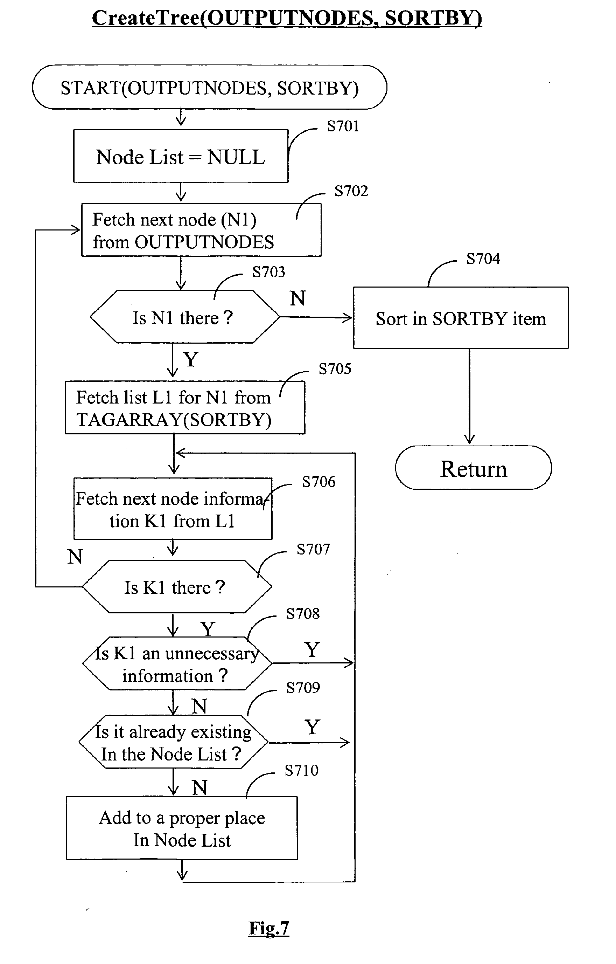

Fig.7 is a flowchart of procedural steps describing the tree structure formation using CreateTree (OUTPUTNODES, SORTBY) function. Firstly, the NODELIST is set to Null in step S701. Then in step S702, the next node (N1) is fetched from OUTPUTNODES. then the list L1 corresponding to node N1 is fetched from TAGARRAY in step S705. In step S706, the next node information (K1) is fetched from the list (L1).

Again a check is made in step S707, to determine if K1 is there or not. If it is not there, then the flow is directed to step S702 else in step S708, it is checked if K1 is unnecessary information. If yes, the flow is redirected to step S706, else again a check is made to determine if this information (K1) is already present in the node list or not. If it exists, the flow moves to step S706 else it is first added to the node list at a proper place in step S710 and then moves to step S706.

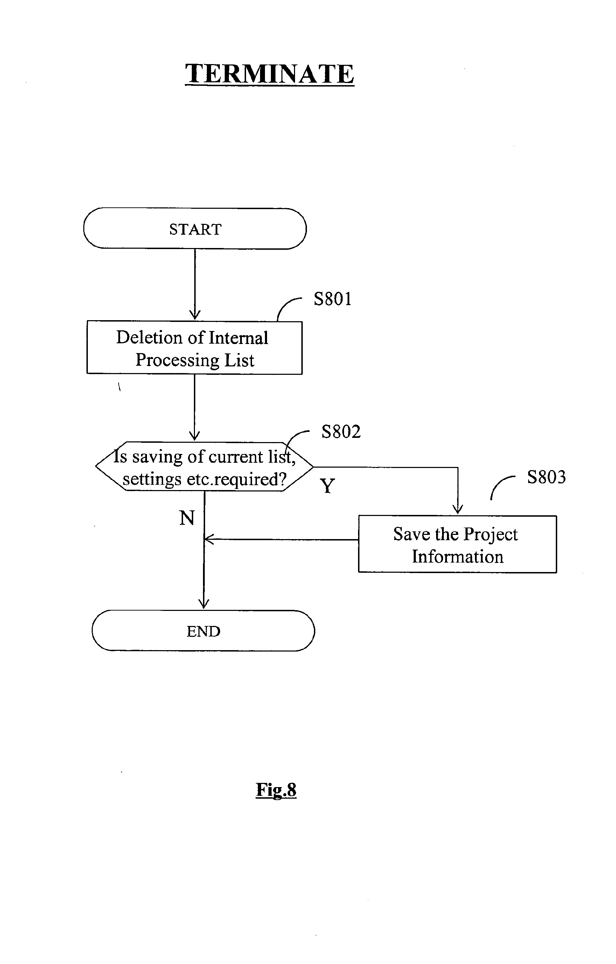

Fig.8 is a flowchart of procedural steps associated with TERMINATE process of the system. In step S801, the deletion operation of the internal processing list and variable is performed. Then in step S802, a check is made to determine if there is a need to save the current list, settings etc. If not, the process ends else the project information is saved in step S803 before the ending the process.

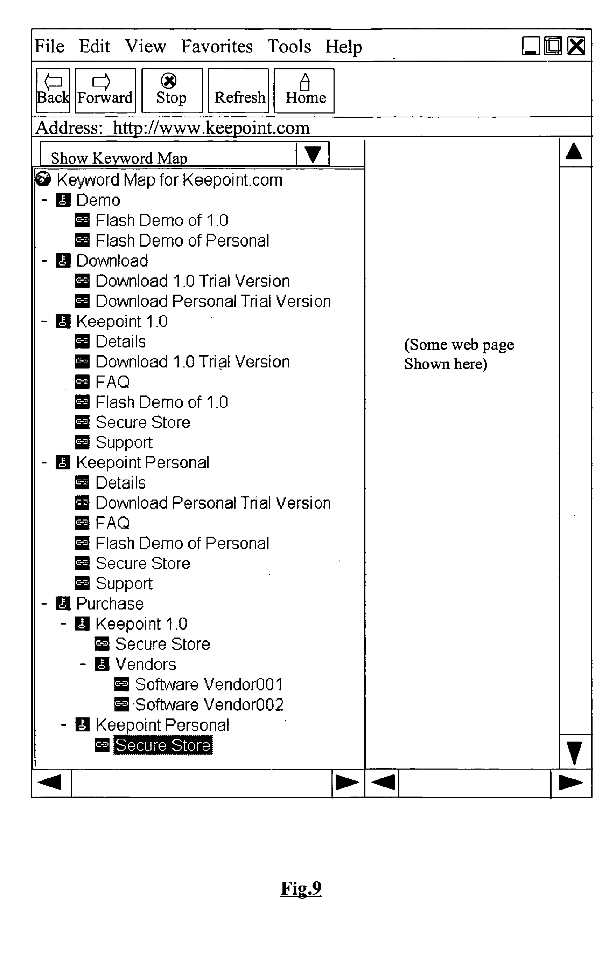

Fig.9 shows an example of the Keyword Map of Web-View Generator. As can be seen from the figure, the system has automatically picked up and organized the keywords and title of the page is shown below it. A page can have multiple keywords and thus in this view, the same page is shown below each of the keywords. For example, the page Secure Store has "Keepoint 1.0, Keepoint Personal, Purchase/Keepoint1.0, & Purchase/Keepoint Personal as the keywords & thus appears at 4 places.

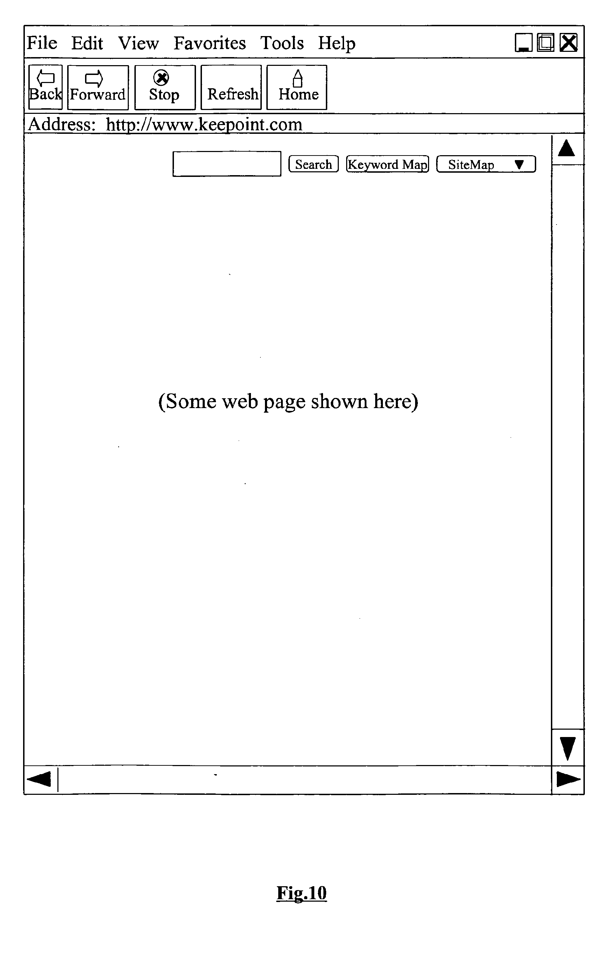

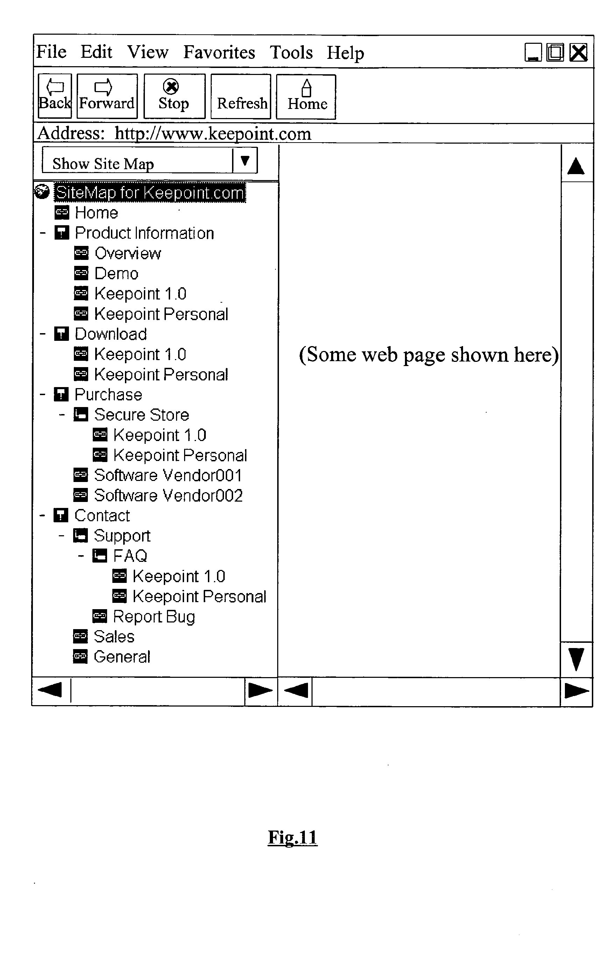

Fig.10 shows an example of picture settings of indicatory type. It can select and set the keyword map as shown in Fig.9 or the site map as shown in Fig.11 using combo box and pulldown menu.

Fig.11 shows an example of the Site Map of Web-View Generator. As can be seen from the figure, titles of each page are arranged and keywords are displayed below the titles.

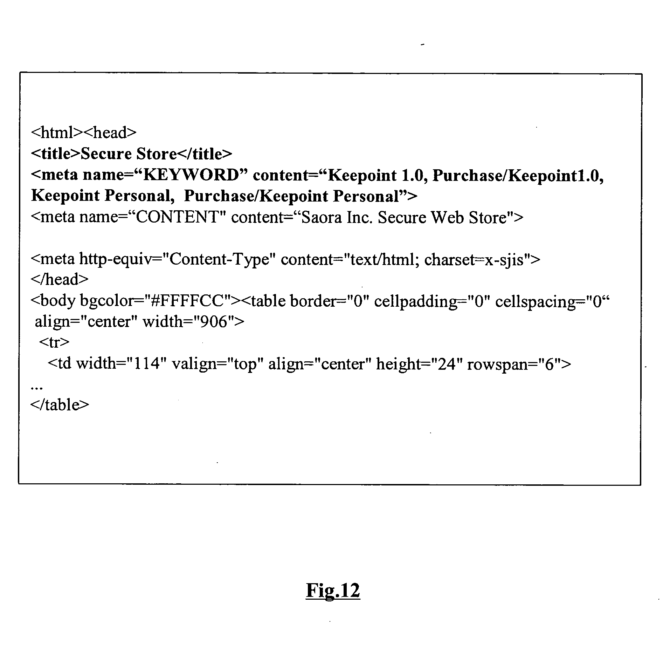

Fig.12 shows an example of web page contents. As can be seen from the figure, the user can distinguish title by title tag and keyword by keyword tag and extract it.

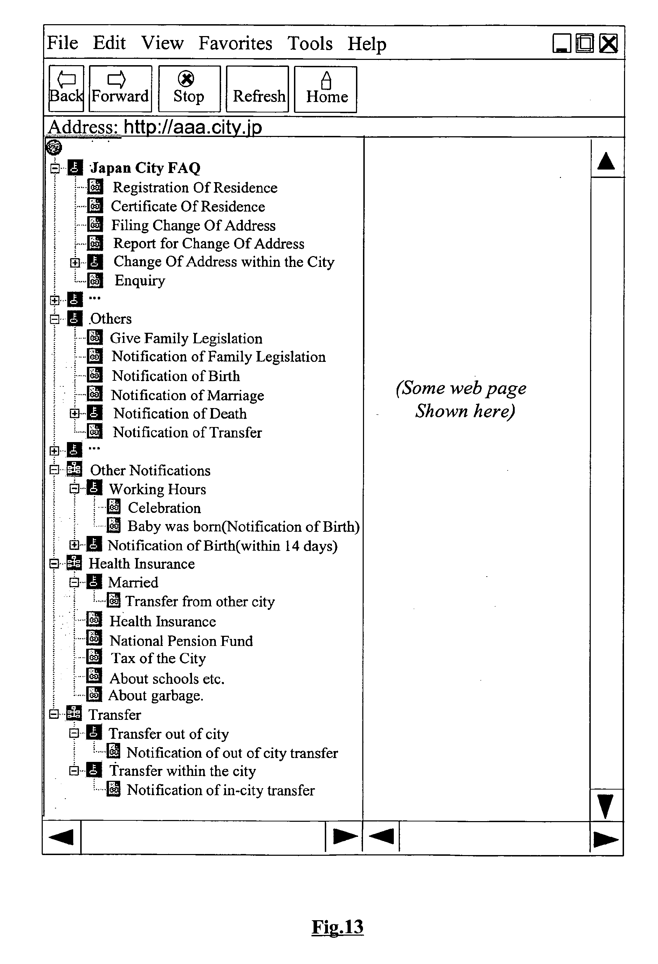

Fig.13 shows an example view of the keyword map for an FAQ page of Self Governing Committees. As can be seen from the figure, the same information can be retrieved from different keywords e.g., if the user already knows what notification has to be filed, then he can directly find it below the notifications or he can search it from the events e.g. when a baby was born etc.

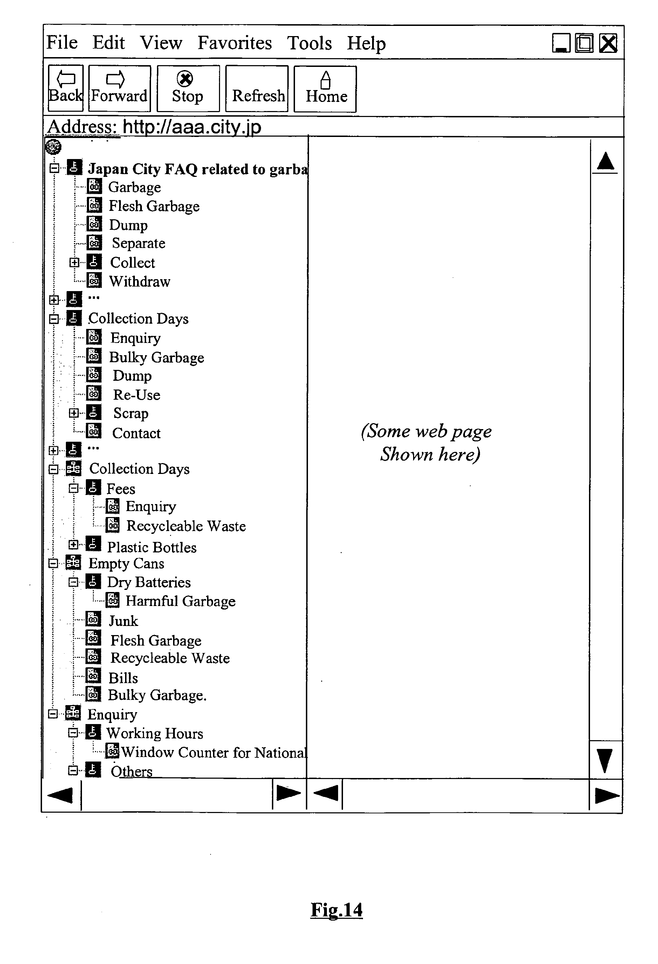

Fig.14 shows an example view of an FAQ subsystem for garbage related details. As can be seen from the figure, the same information can be found from different dimensions, for example, first by NOUN or OBJECT followed by VERB or ACTION to be done or first by Collection Day or Bills.

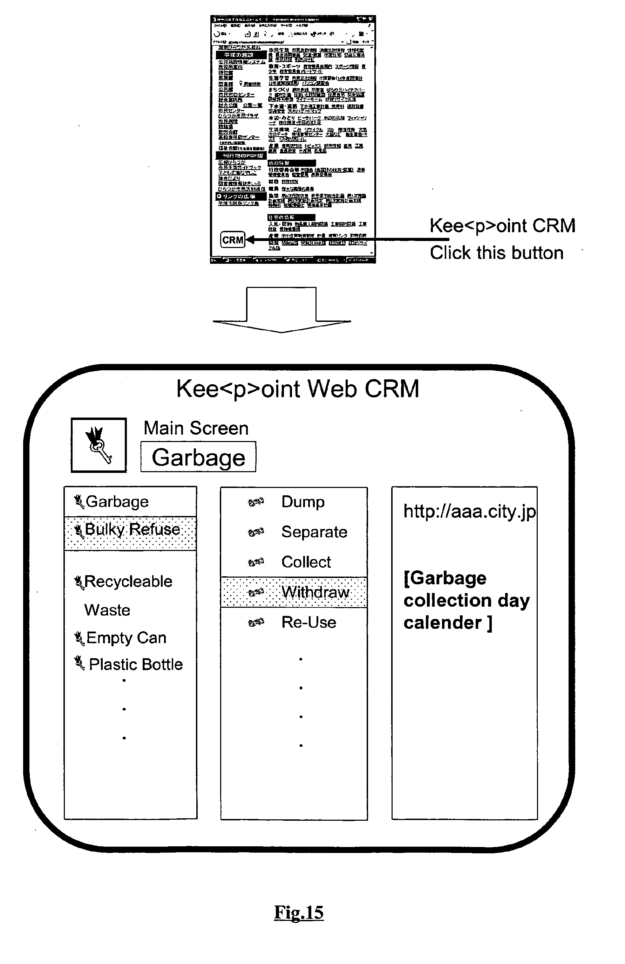

Fig.15 shows an example of the CRM main picture. The main screen corresponding to the input keyword is indicated.

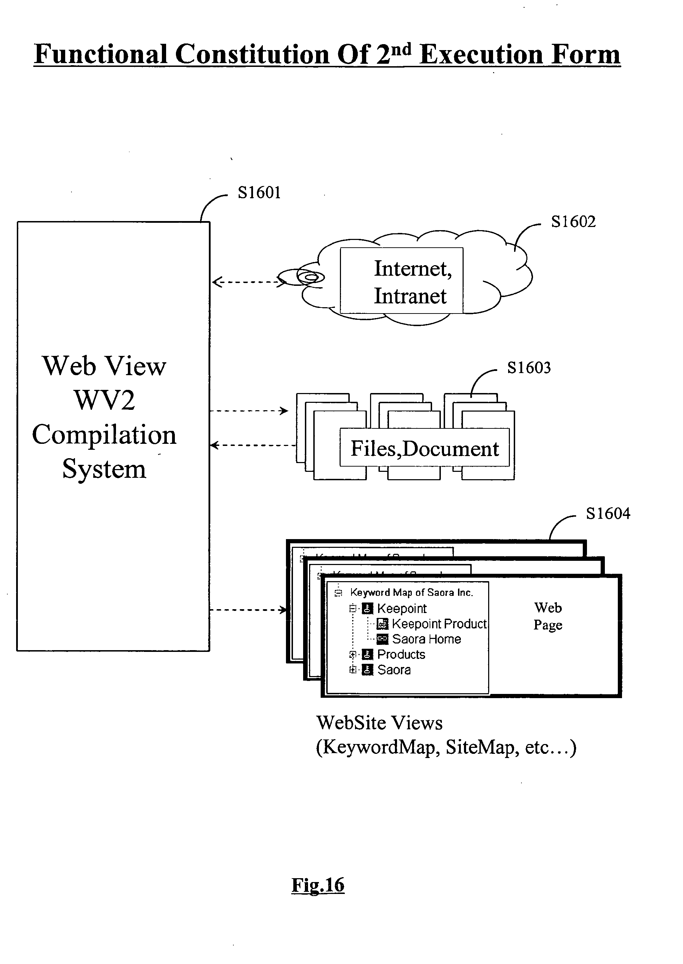

Fig.16 gives the functional constitution of the second embodiment. The system deals with information 1602 available through Internet and Intranet and based on that information, this makes different from the first embodiment. The processing is done after storing information of specified website temporarily.

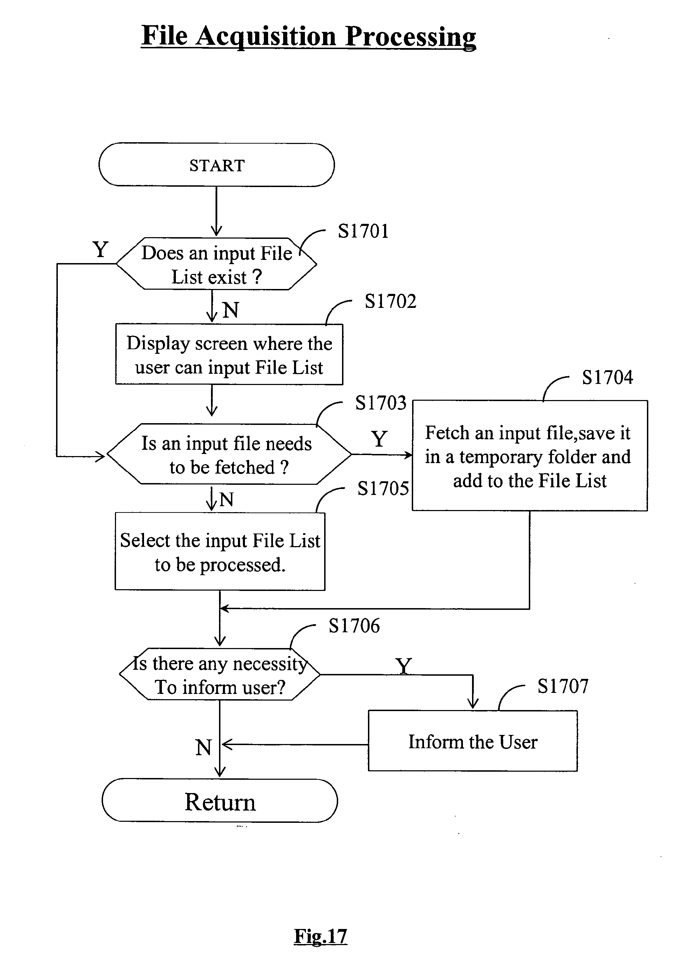

Fig.17 is a flowchart of procedural steps for processing the acquisition of an object input file in Execution Form 2. In step S1701, a check is made to determine whether an input File List exists or not. If not, then in step S1702, a screen is displayed where the user can input the File List. Next in step S1703, a check is made to determine whether an input file needs to be fetched or not. If not, then in step S 1705, the input File List that needs to be processed is selected; otherwise in step S 1704, external internet etc is specified as input file then input file is fetched, saved in a temporary folder and then added to the File List. Then step S 1706 is followed where it is decided whether to inform the user or not. If not, then the process ends else the user is informed in step S 1707 and then the process ends.

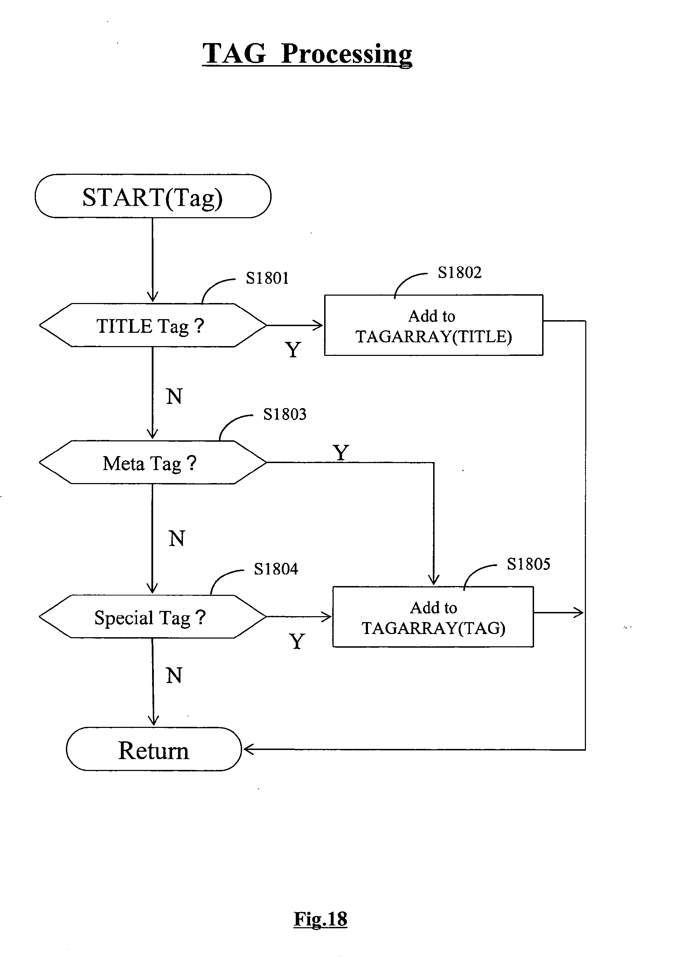

Fig.18 is a flowchart of the procedural steps followed when the type of tag is determined. A check is made in step S 1801 to determine if the tag is title tag or not. If it is title tag, then it is added to the TAGARRAY(TITLE) in step S 1802 and the process ends. If not then a check is made in step S 1803 to determine if the tag is a Meta tag. If yes, then it is added to the TagArray of tags in step S1805 and the process ends. If not, then in step S1804, a check is made to determine if the tag is a special tag. If it is a special tag, then it is added to the TagArray of tags in step S 1805 and the process ends. If not, then the process ends.

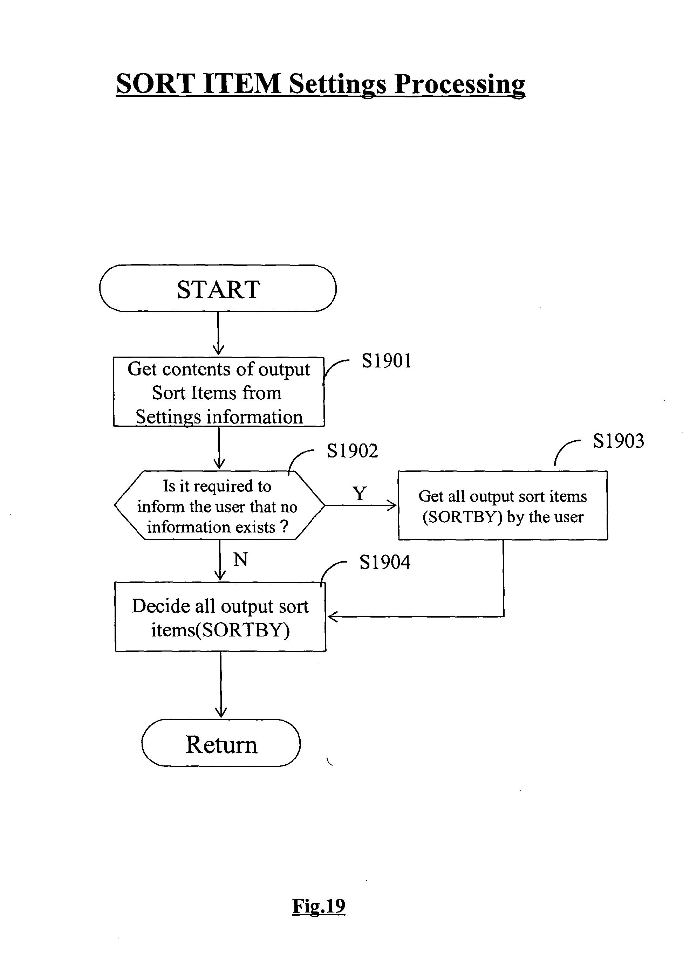

Fig.19 is a flowchart of the procedural steps for Sort Item settings processing (the step S601). In step S1901, the information of output sort item is obtained from settings information. In step S1902, a check is made to determine if it is required to inform the user that no information exists. If not, then in step S1904 the output sort items (SORTBY) are decided and the process ends. If yes, then in step S1903, all the output sort items are obtained from the user and step S 1904 is followed and the process ends.

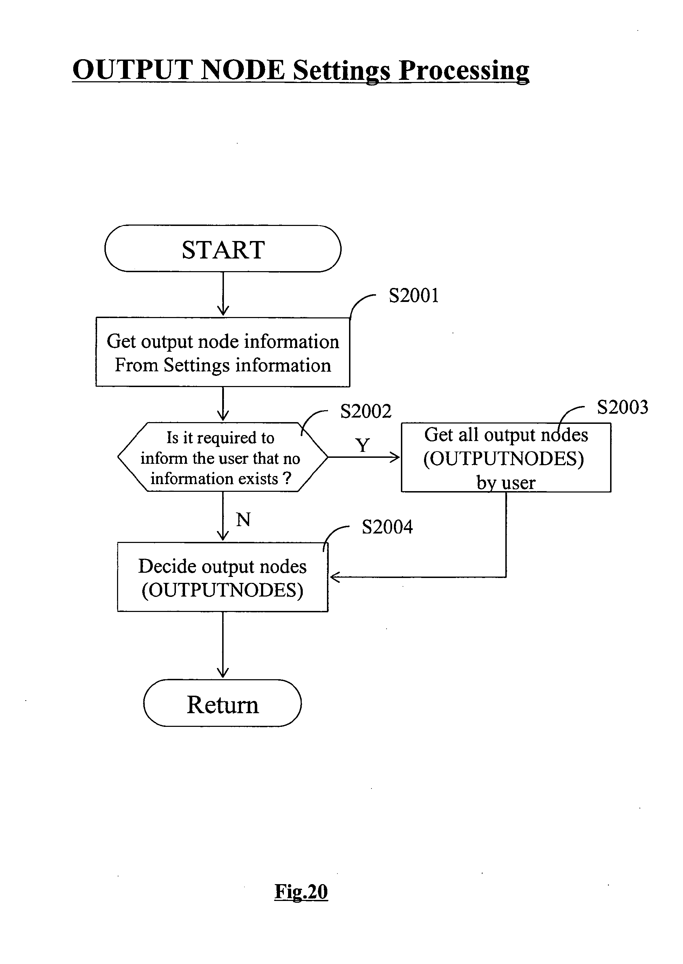

Fig.20 is a flowchart of the procedural steps for Output Node settings processing (the step S604). In step S2001, the information of output node is obtained from settings information. In step S2002, a check is made to determine if it is required to inform the user that no information exists. If yes, then in step S2003, all the output nodes are obtained from the user and step S2004 is followed in which output nodes (OUTPUTNODES) are decided and the process ends.

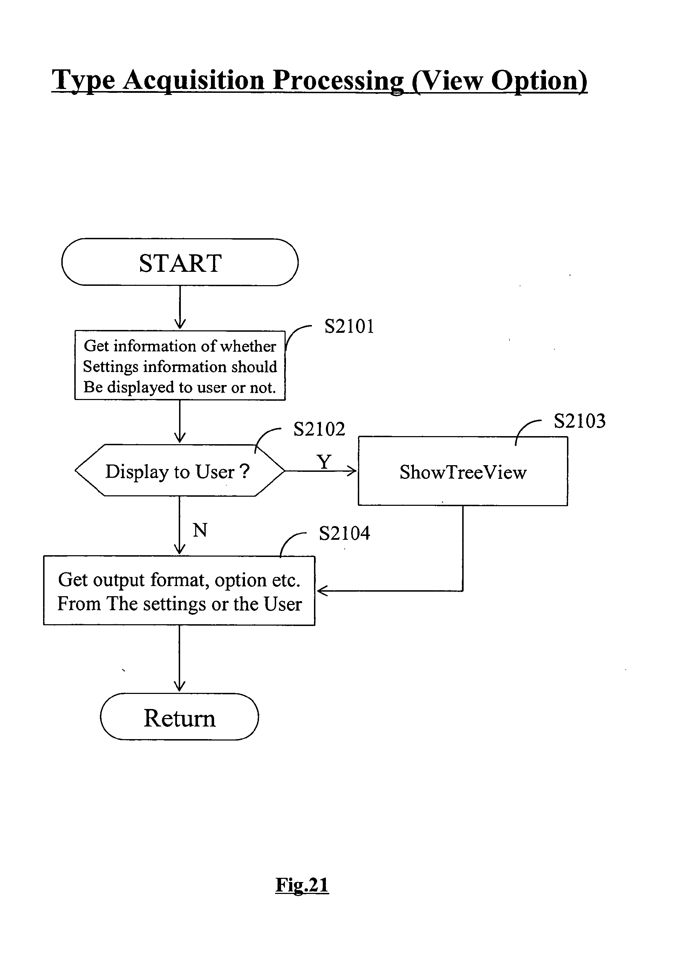

Fig.21 is a flowchart of the procedural steps of View Option, Type Acquisition processing (step S606). In step S2101, the information is acquired whether there is a necessity to be displayed to the user or not from setting information. If not, then in step S2104, output format, option etc are fetched from the settings or the user and the process ends. If yes, then function ShowTreeView is called in step S2103 and the process goes to step S2104.

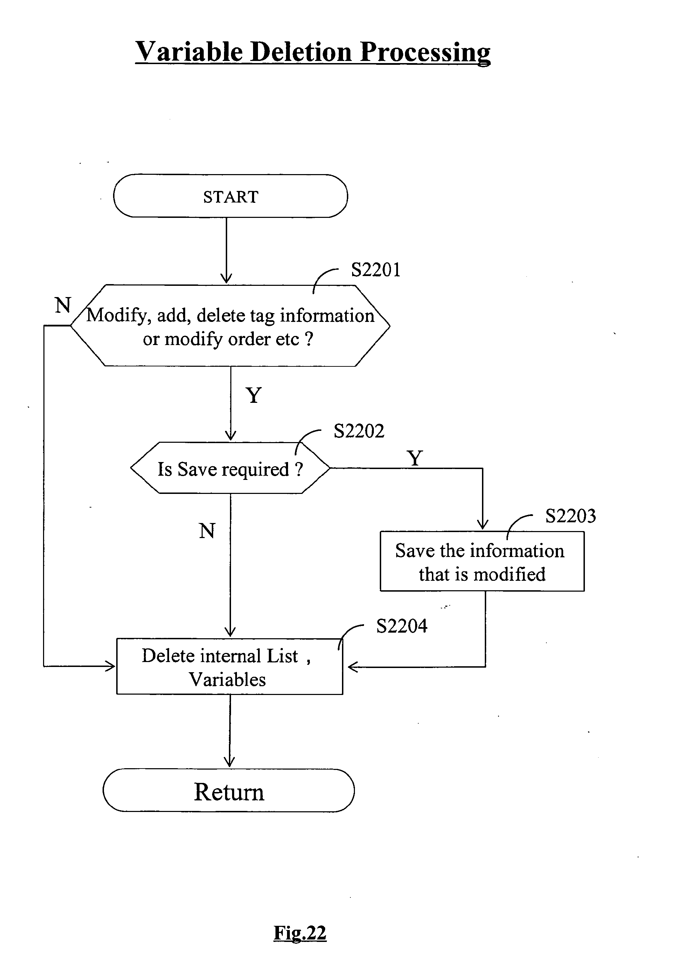

Fig.22 is the flowchart of the procedural steps of Variable Deletion Processing (step S801). If there is a modify order such as modification, addition, deletion or modification of turn of tag information, determines that changes are to be saved, and then in step S2203, the modified information is saved (steps S2201 to S2203). And Variable Deletion is carried out in step S2204.

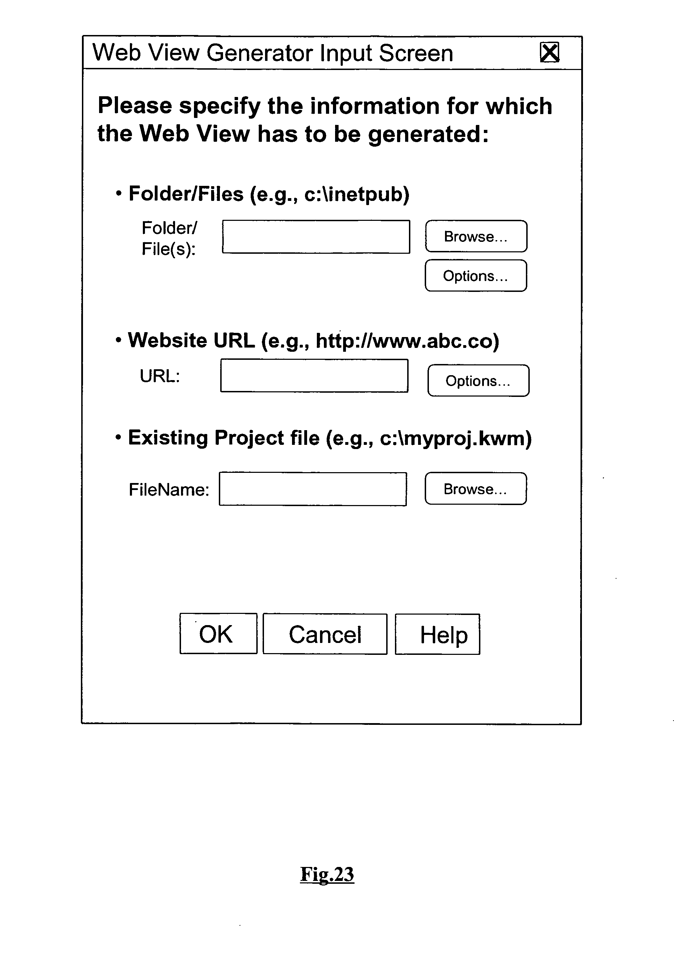

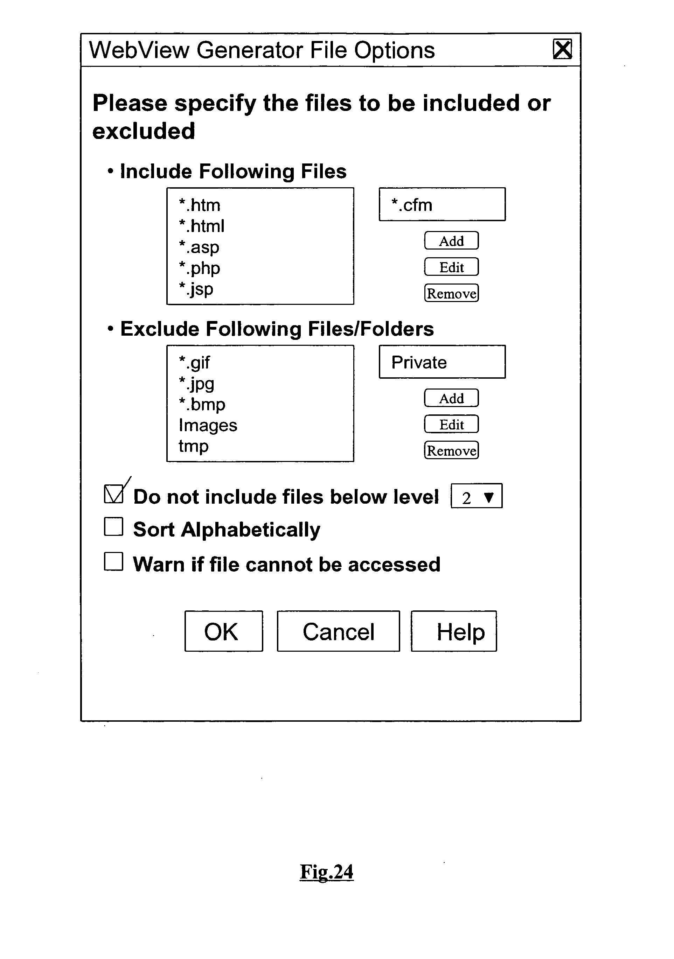

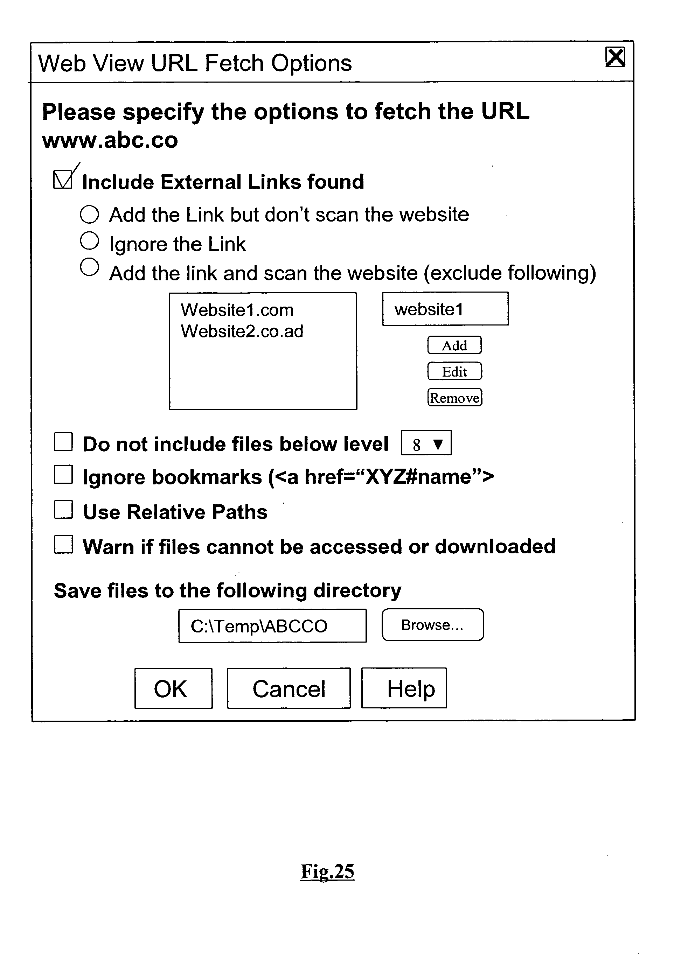

Fig.23 shows an example of the input screen. The file for which the web view has to be generated is specified such as Folder or file(s) of the websites or Existing Project Files. Then option can be specified which is explained in Fig.24 and 25.

Fig.24 shows an example of the File Options screen of Web View Generator. This screen is used to specify the types of files/folders to be included, excluded and one can also specify the depth of subfolders.

Fig.25 shows an example of the URL Fetch Options screen of Web View Generator. This screen can be used to specify options for the URL to be fetched. As can be seen from the figure, some example options include what is to be done when external links are found while parsing the HTML file, ignoring the bookmarks, relative path usage, specifying web site should be excluded while scaning bookmarks, specifying depth of subfolders.

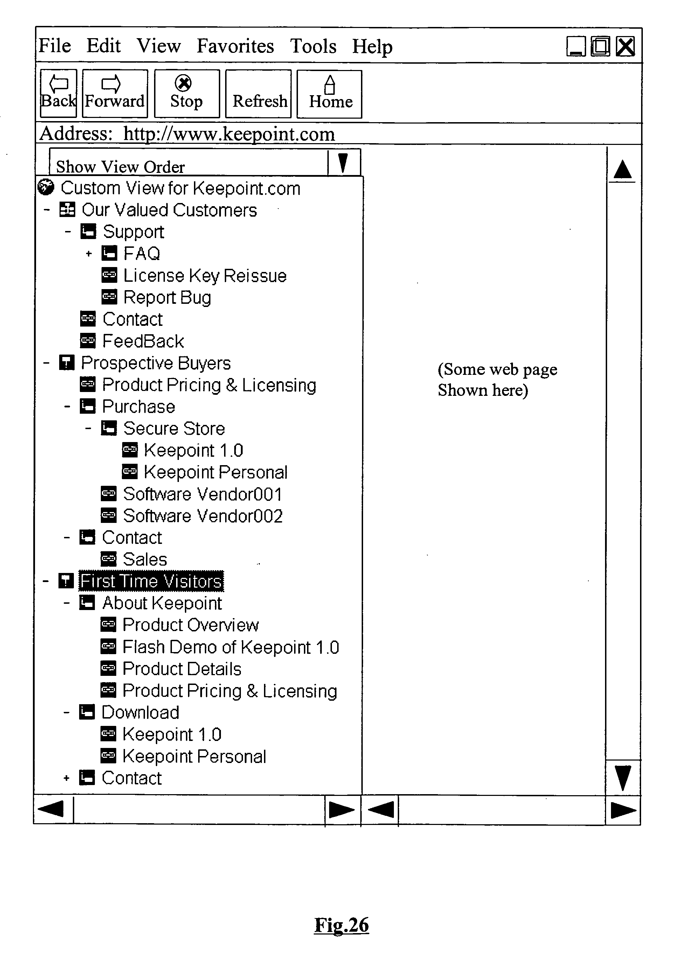

Fig.26 shows an example of Show View Order option of the Web View Generator. For the user browsing web it is often difficult to determine which web site is prior than other to show on contents of web site. And it is not easy to specify the orders of views in web site for creator of web site because one website can be browsed by various users and necessary information differs according to types of user. And to use cookie etc not only invalid for different machines, but also there is a necessity to give private information or a result of selections which doesn't have a way to generalize it. Then by enbedding custom tag into very web page, custom view; like Fig. 26, is able to be made automatically and be displayed by orders according to user types.

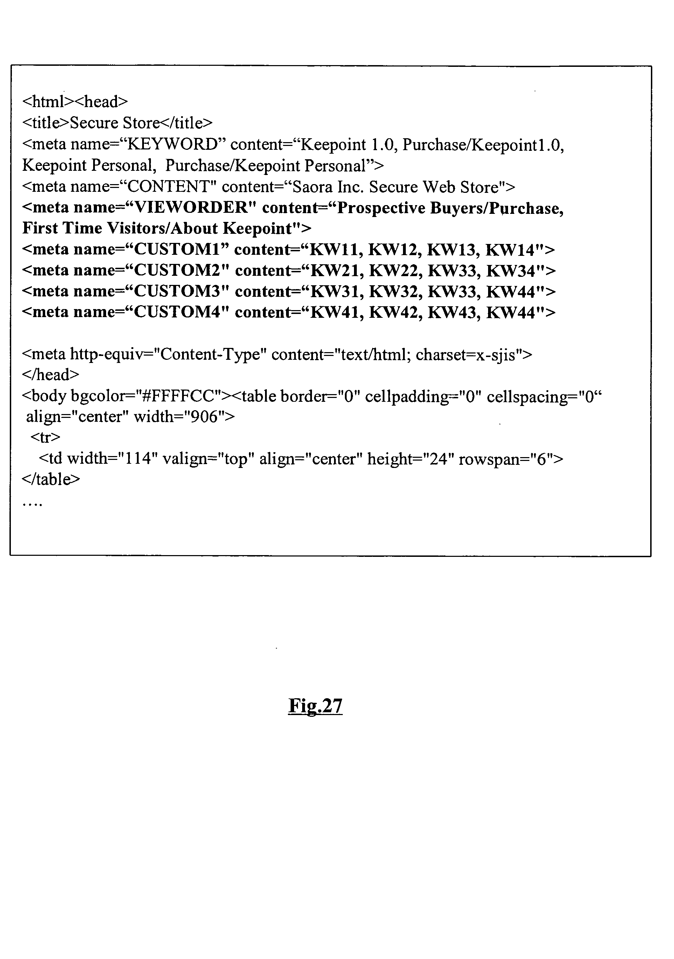

Fig.27 shows an example of web page contents in which Custom Tags are enbedded. As can be seen by figures, order to display keyword has been set independently, such as KW11, KW12, KW 13 and KW 14 to CUSTOM 1.

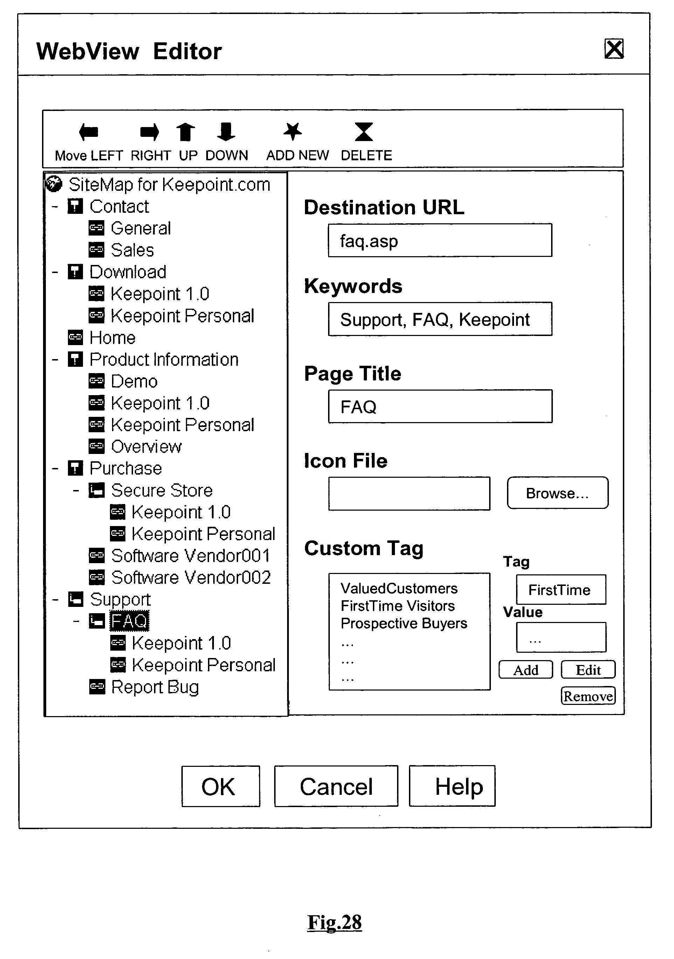

Fig.28 shows an example UI of ShowTree View of the Web View Editor. Here, user can edit the view generated by the system. As can be seen from the figure, the SITEMAP generated automatically, is in alphabetical order and hence in order to obtain the final SITEMAP shown in Fig.11, user will need to edit the view. The view can be edited in several ways - Drag and Drop the nodes to appropriate places, move the nodes either to the left or right or up or down etc. using the TOOL BAR shown or other means. Also, the user is able to modify the Keywords, Page Title, Icon File to be shown in the view. User is also for example, able to add, edit or remove custom tags.

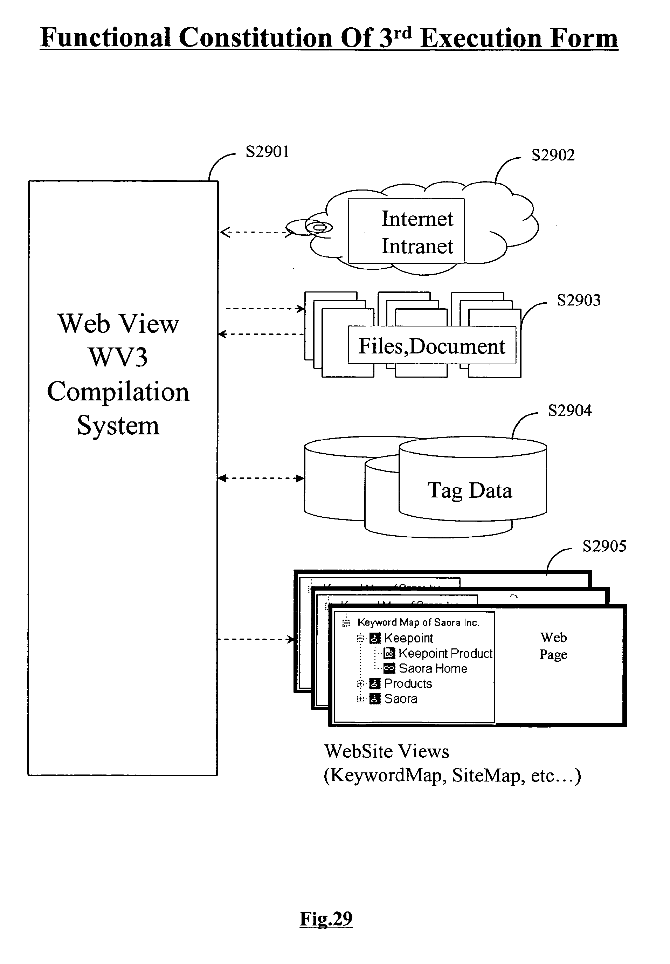

Fig.29 gives the functional constitution of the third embodiment. Tag Data information 2904 is stored independent of documents. It makes this embodiment different from the second embodiment. Tag Data information 2904 is provided due to which there is no need to embed the tag inside the file and also the need to correct the file each time, when the tag is added, is gone. It is suitable for a multi-user kind of environment. For instance, difining two kind tags PRIVATE and PUBLIC, user can use PRIVATE tag in particular organization and PUBLIC tag in the area which is opened to all people.

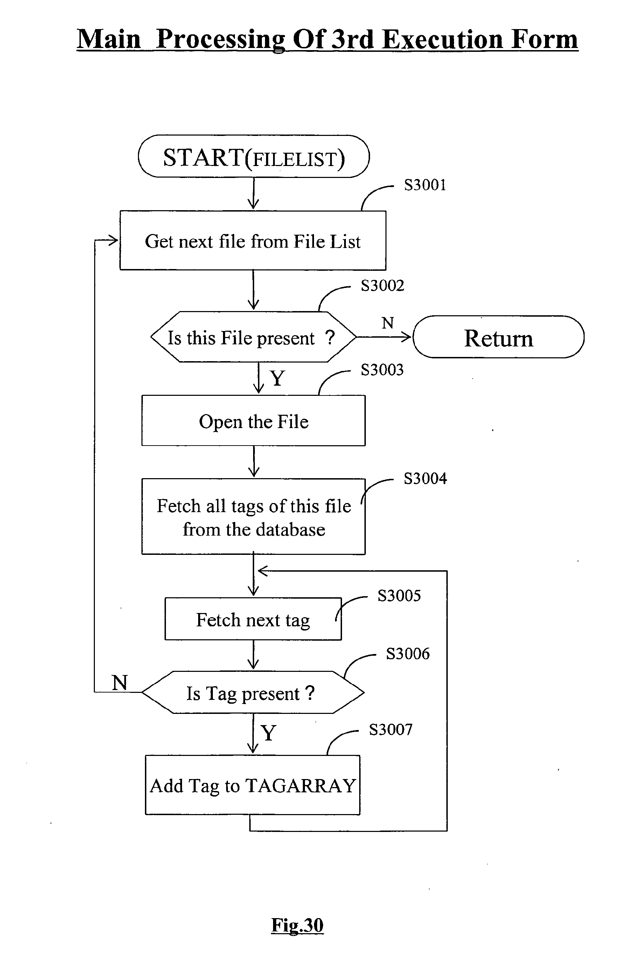

Fig.30 is the flowchart of procedural steps of Main Processing of the third embodiment. In step S3004, all the tags of the file are fetched from the database. It makes this embodiment different from the first embodiment. Also update of the tag is performed for database.

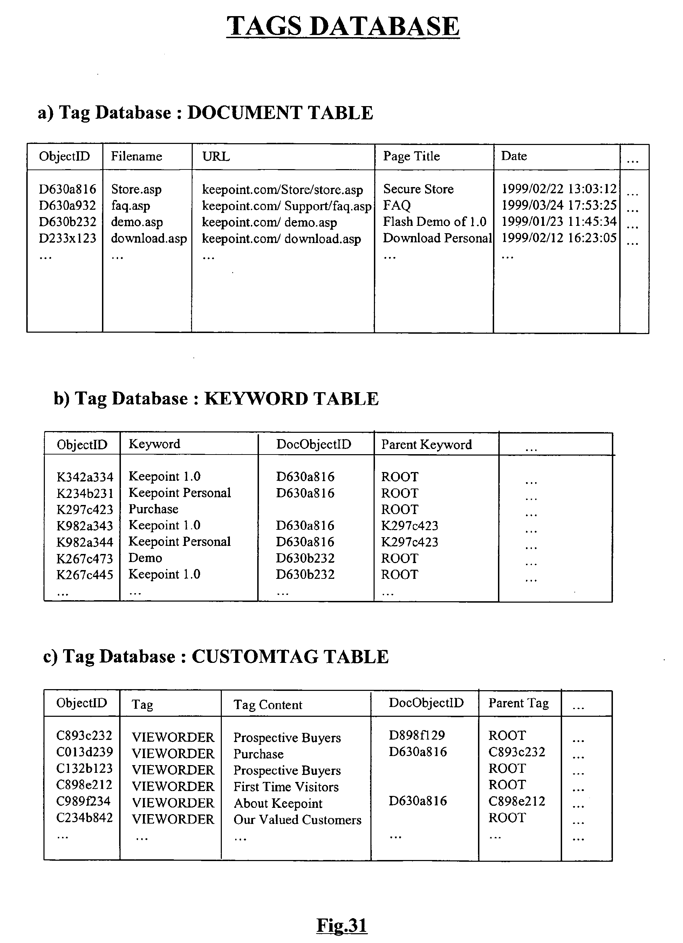

Fig.31 shows the constitution example of the tag database. In document table (A), an object ID is granted to each document. The table contains the object ID of the document, the corresponding file name, URL, page title and the retention date and time. In the keyword table (B) and object ID is granted to each keyword. The table contains the object ID, the corresponding keyword, the document, which includes that keyword, and the parent keyword, which is just before the keyword on tree. When identical keyword exists in another document, it is handled as another object. In the custom tag table (C), an object ID is granted to each tag. The table contains the object ID, the corresponding tag, contents of that tag, the object ID of the document, which includes that tag, and the parent tag which is just before the tag on the tree.

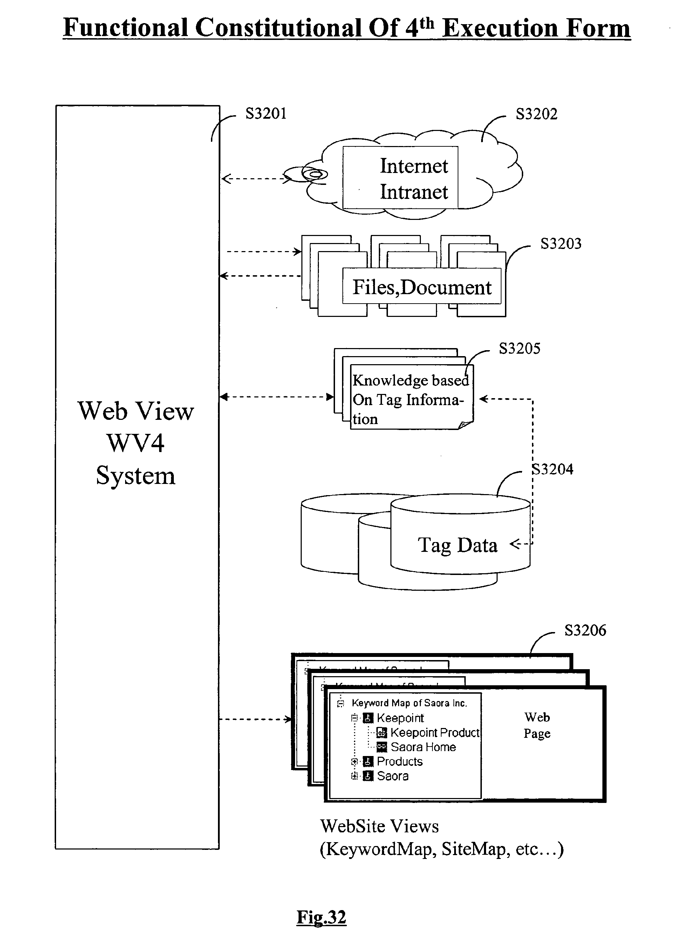

Fig.32 gives the functional constitution of the fourth embodiment. The present embodiment is different from the third embodiment in comprising tag information knowledge base 3205.

A tag for the general or the specific territory is defined beforehand in the tag information knowledge base 3205 and, as for the system, the user guides where the tag attached to each page, will be useful. In this way, arbitrary tag attaching by each person is prevented when many persons do tag attaching on many documents.

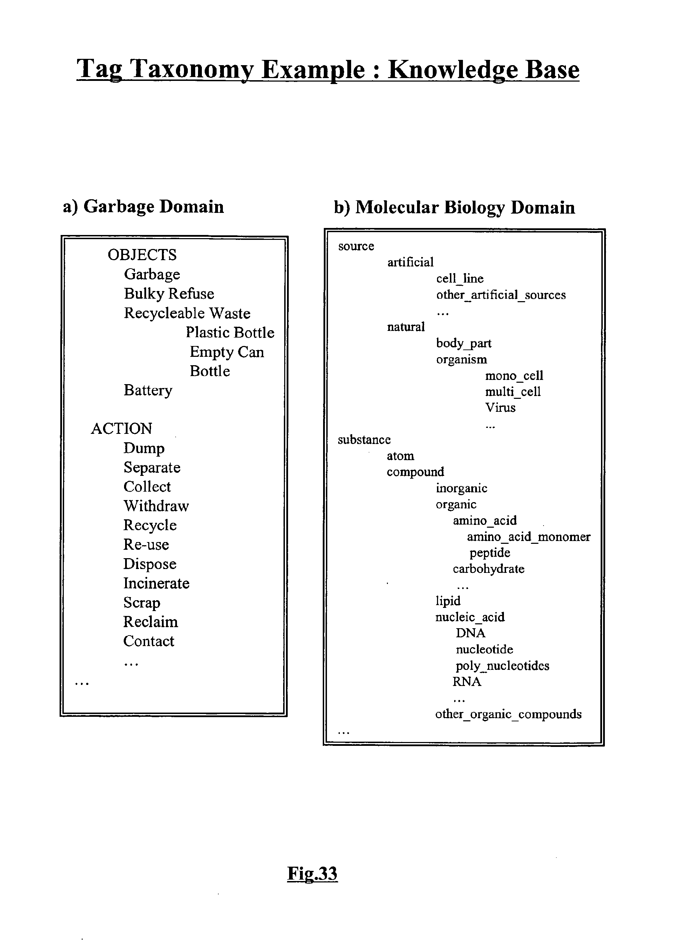

Fig.33 shows an example of Knowledge Base. An example of knowledge concerning garbage is indicated here. There are "garbage", "bulky refuse", "recyclable waste" etc, also are "plastic bottle", "empty can" and "bottle" under "recyclablate waste". Also "dump", "separate" are defined as ACTION concerning garbage. Tag Taxonomy knowledge is predefined with the system and to add, modify or delete the knowledge are possible by a knowledge management tool. Also knowledge of taxonomy on particular subject can be added. For example, in case of Residents Relations Management System of a local government, since the procedures like family registration report and inhabitant register etc. are by laws, Govt. rules, this knowledge could be packaged separately and sold as an option to Local Government along with the system.

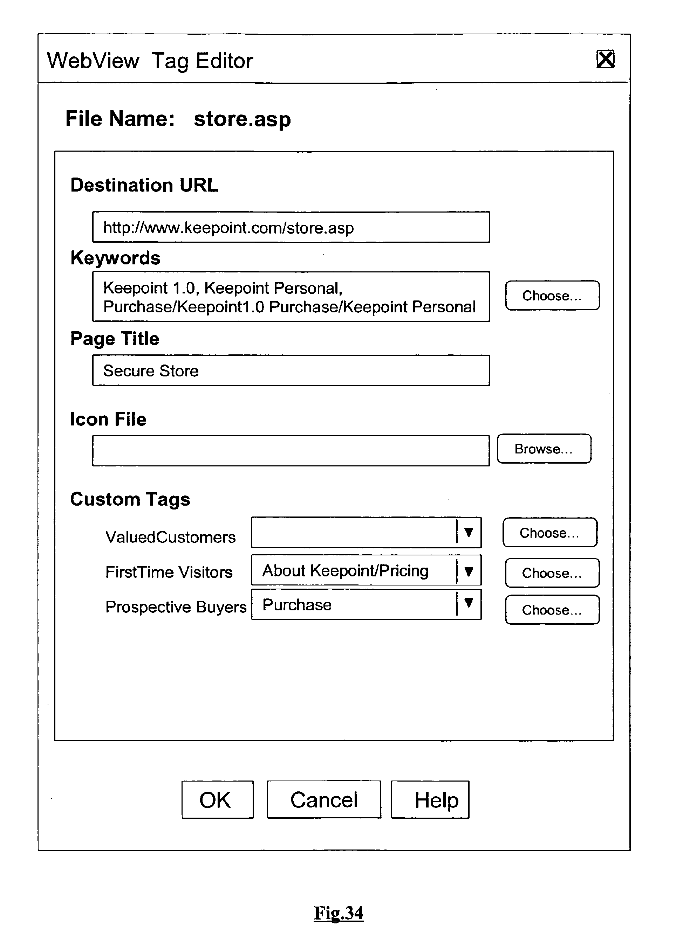

Fig.34 shows an example UI for Editing Tags of a document. As can be seen from the figure, the Keywords and Titles can be either directly input or using the Choose button, the user can select the tags based on the Taxonomy of tags available with the system. Page Title, Destination URL etc. can be edited. Custom tags can be specified as well as the Icon File can be browsed.

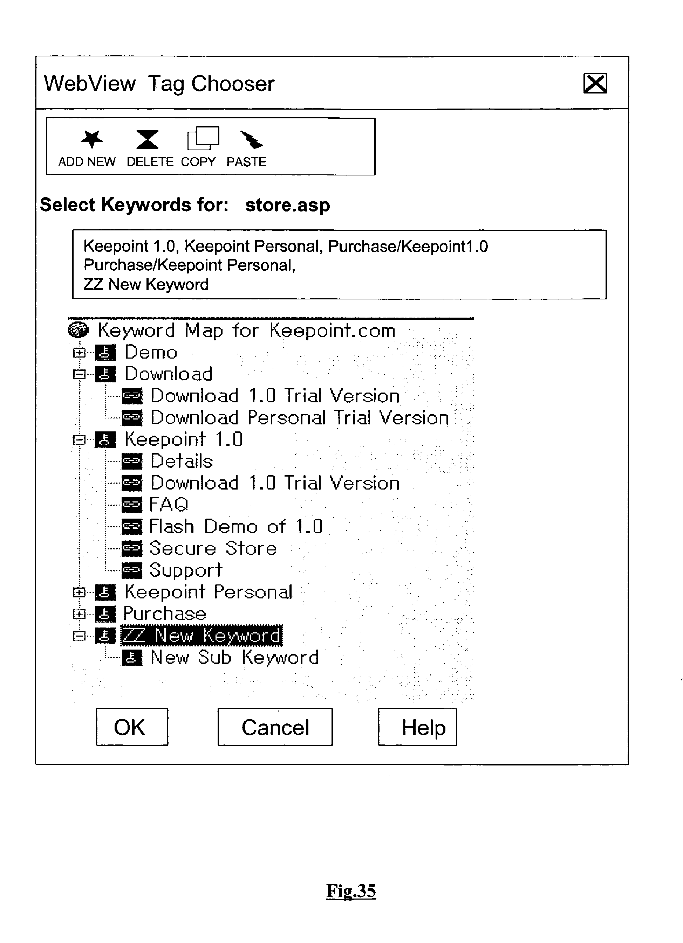

Fig.35 shows an example UI of Tag Chooser. Depending on the Tag Type chosen in previous figure, the system shows all the values of the Tag in a tree view, in addition to the tag taxonomy knowledge and user can not only choose single or multiple nodes, but also define here new keywords and also change the position of keywords in the keyword map by drag and drop or cut (copy) and paste nodes.

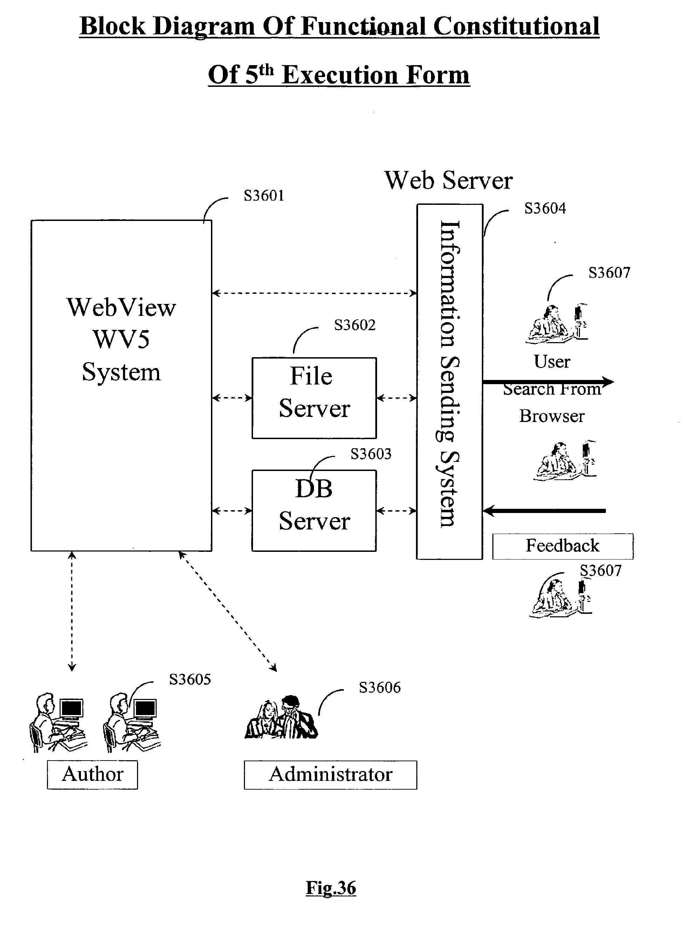

Fig.36 shows the functional block diagram of the functional constitution of 5th execution form. It provides the view compilation system in the client server type system. S3601 is the view compilation system, S3602 is the file server which manages the files, S3603 is the database server which manages the database, S3604 is the information sending system. S3601 can send and receive the data with S3602, S3603 and S3604. S3605 is the author who does the tag attaching of the document etc on the client machine or using the web etc. Also S3606 is the administrator who does the confirmation and management of tag information on the client machine or using the web etc. S3607 is the user who interacts with the web view compilation system using the information sending system S3604. The user can also browse and search for information using the browser and give a feedback to the information sending system by refering to S3601.

Each function written in upper part can be placed on server side or independent client terminal or both server and client respectively.

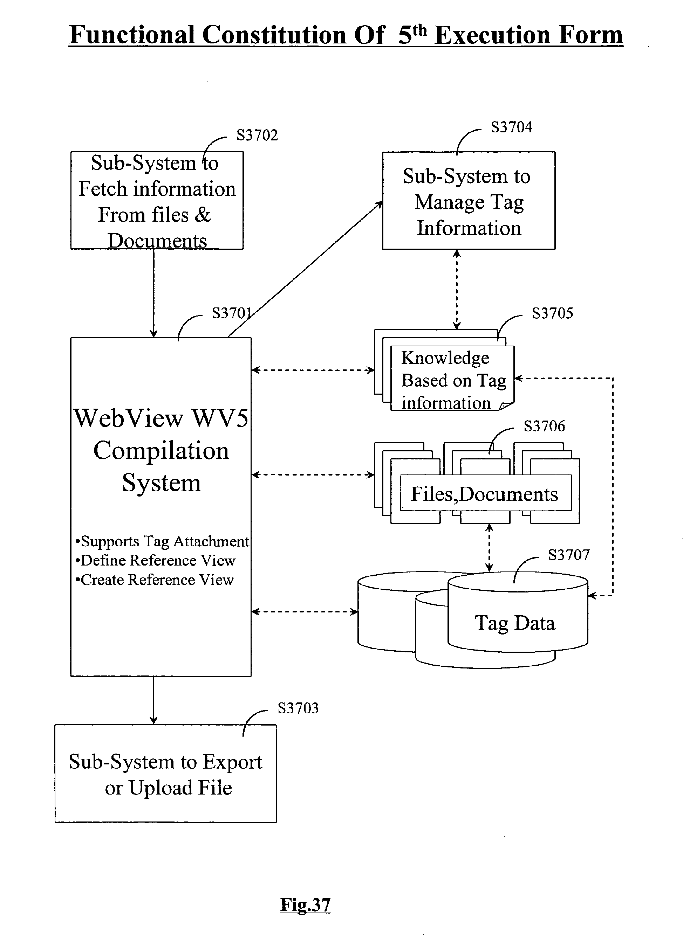

Fig.37 gives the functional constitution of Execution Form 5. It consists of a View Compilation System S3701 where it acquires tag data of the title and the keyword etc embedded in the files/documents S3706 and generates a view. In this view, title of the document, which corresponds to that keyword, is indicated at the end of the tree. When it selects a title, it is able to trace the document corresponding to that keyword. In step S3702, the acquisition sub-system is used to fetch the information from the files and documents. In step S3703, it is possible to export or upload a document on web server etc using the file export and upload subsystem.

In step S3704, tag information is managed in the tag information management subsystem. In step S3705, tag for the general or the specific category is defined beforehand in the tag information knowledge base and, as for the system, the user guides where the tag attached to each page, will be useful. In step S3707, Tag Data information is provided due to which there is no need to embed the tag inside the file and also the need to correct the file each time, when the tag is added, is gone. It is suitable for a multi-user kind of environment.

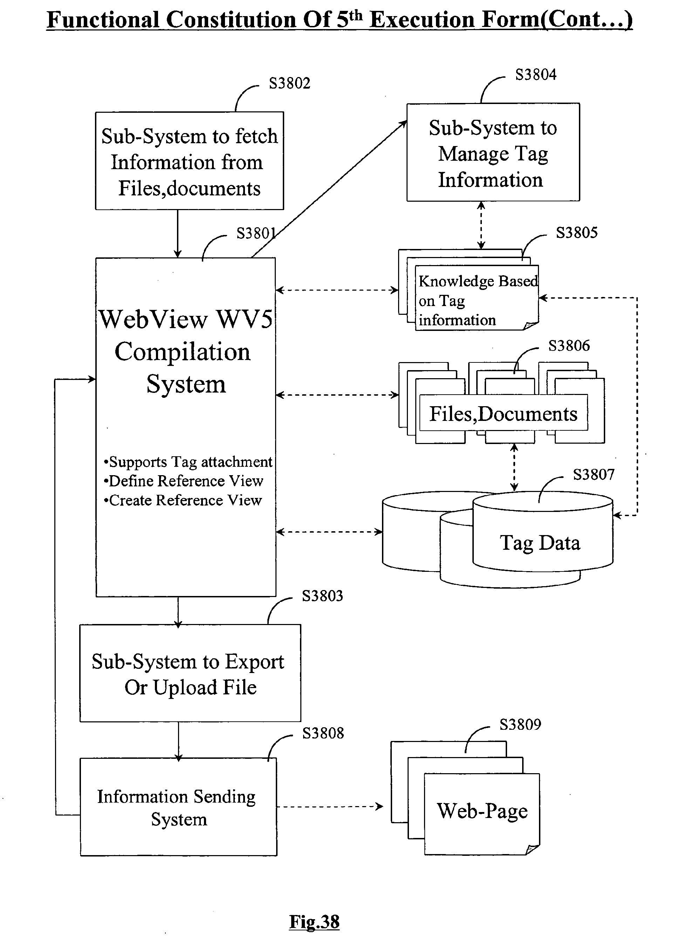

Fig.38 shows the functional constitution of Execution Form 5. In addition to the constitution in Fig.37, information dispatching system S3808 communicates with file export and upload subsystem S3803 and besides the fact that web page S3809 is dispatched, it can give the feedback from the user, that is drawn up by the information dispatching system S3808, to view compilation system S3801. For example, if there is a FAQ System dispatches FAQ page as web page S3809, user can tell the system how was it useful, how improvement should be done (offering another taxonomy etc).

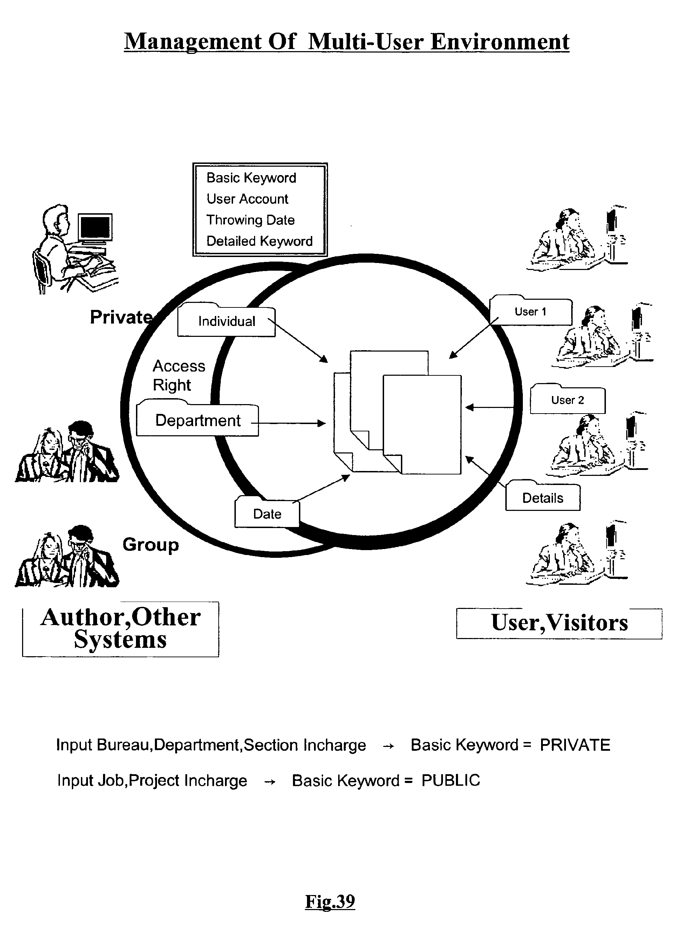

Fig.39 describes the management of a multi-user environment where different people may be accessing the document and different dimensions of tagging may need to be done. For example, it may be necessary to have Private & Public tags i.e., Private tags may be for use within particular organization and Public tags may be open to everyone. It is also possible to define user groups and provide permissions, rights to a unit of groups as to who can ADD, MODIFY, TAG, DELETE, EDIT etc.

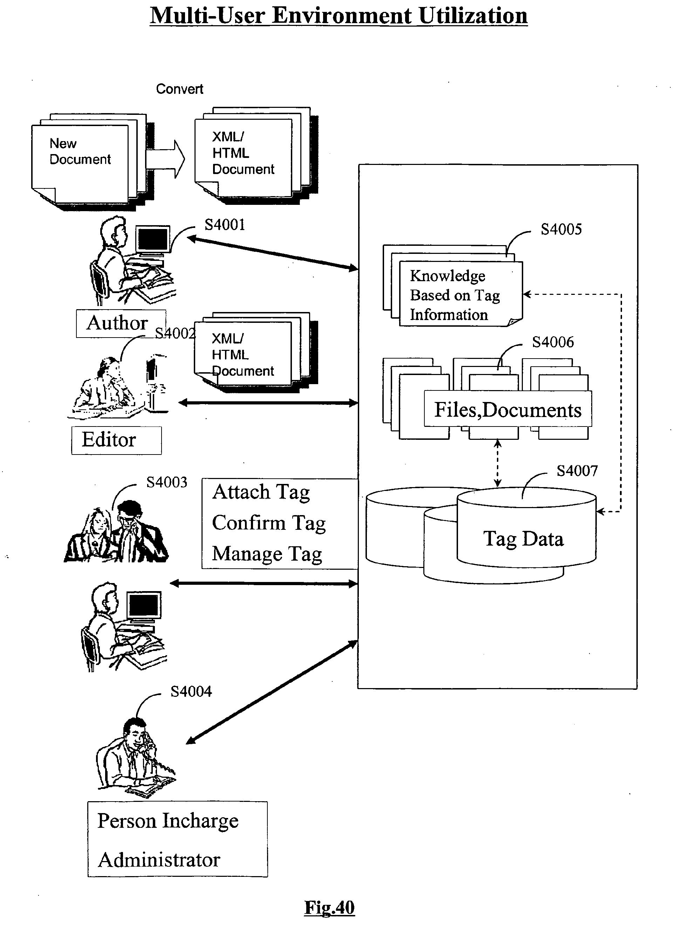

Fig.40 explains the utilization of the multi-user environment. As shown in the figure, different persons can execute document creation, compilation, tag attaching, verification and approval etc of the tag. Check-in and check out function maintains the consistency of the document and the tag. The groups of users do not compile the identical document simultaneously. In addition, the approval of the supervisor is needed before dispatching the document.

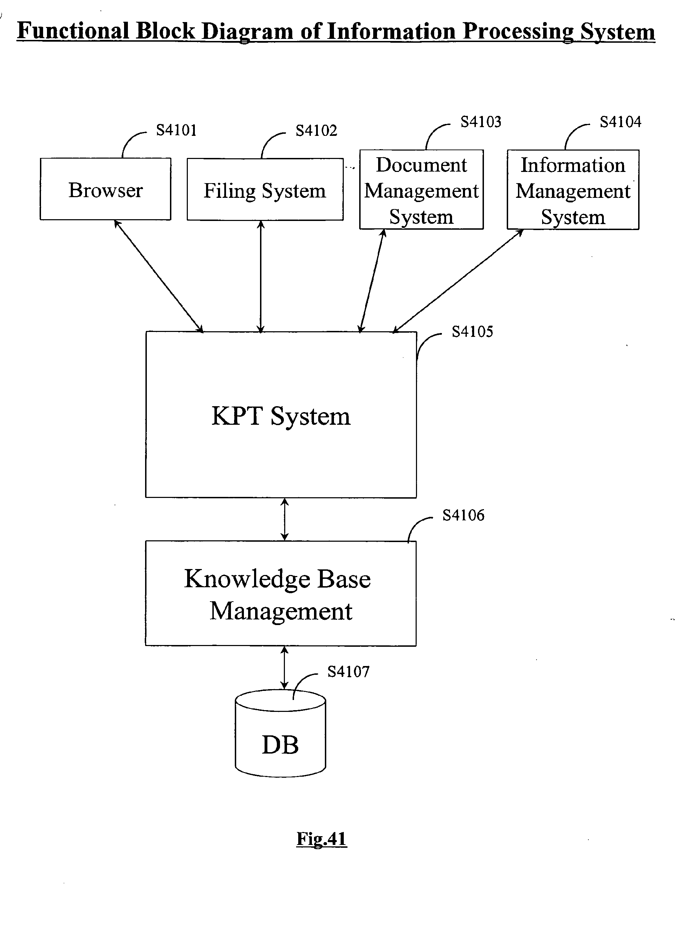

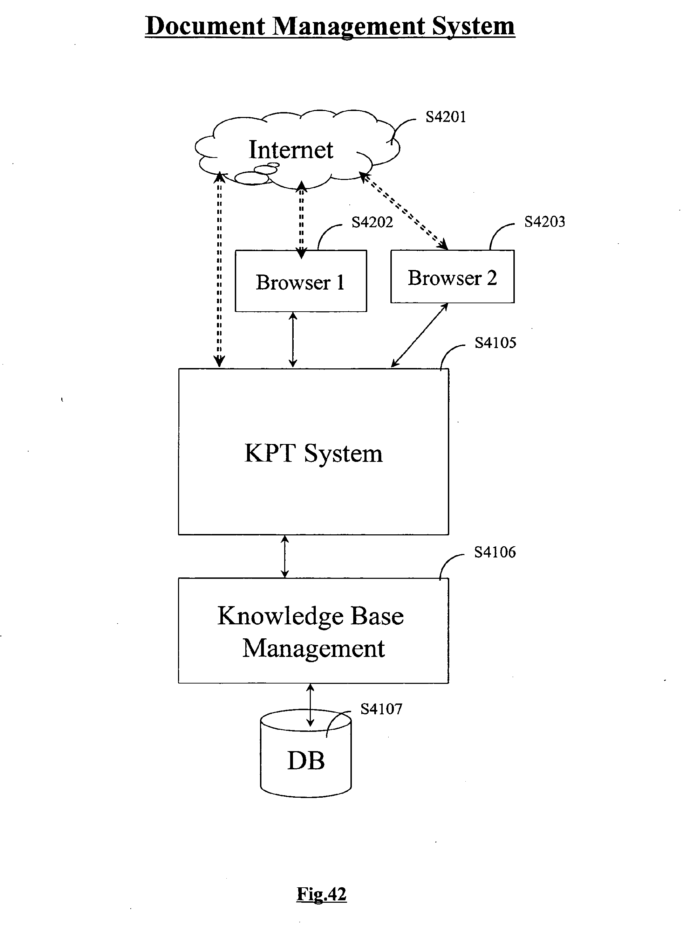

Figs.41 and 42 are the block diagrams, which show the functional constitution of the Document Management System. These systems are for saving browsed page in Internet automatically. And the details of them have been described in Japanese Patent Laid-Open Nos. 2002-56008, 2002-117045, and 2002-304399.

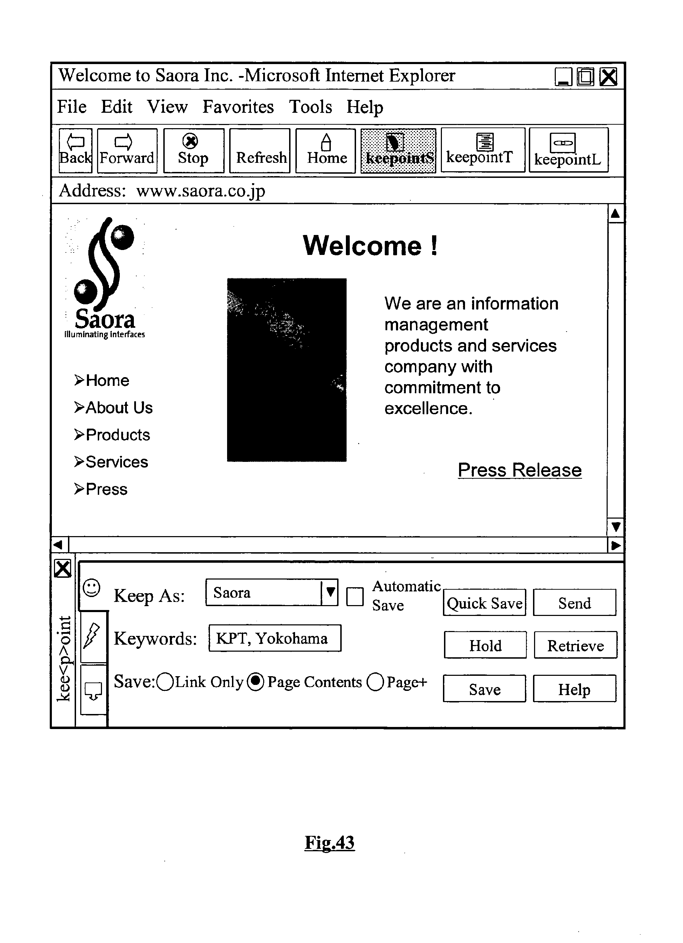

Fig.43 shows the processing picture example of the document management system. It can automatically retain the keyword and save the browsed page in correspondence with the keyword.

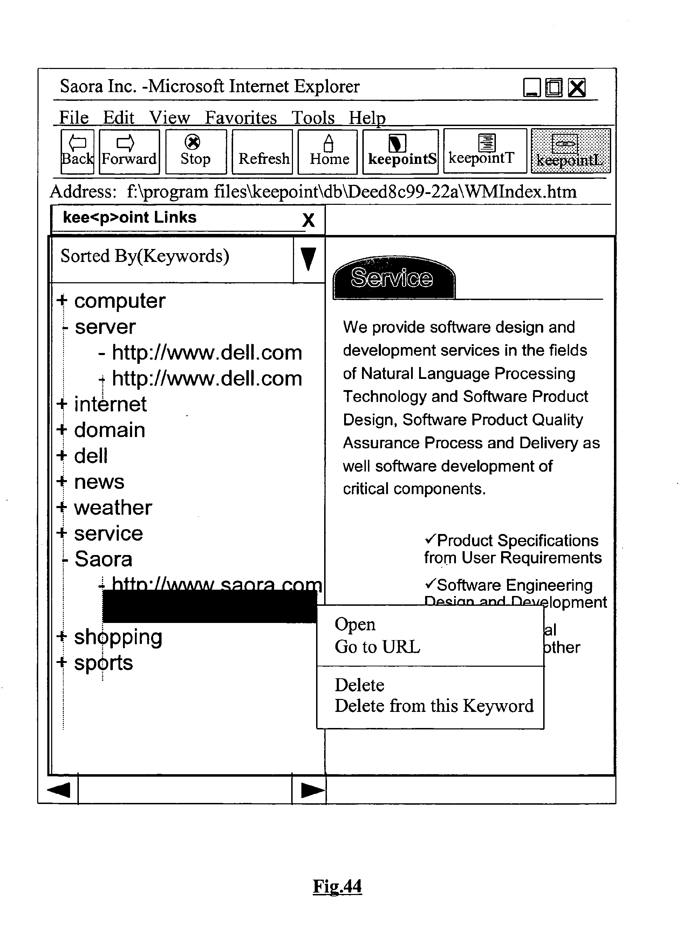

Fig.44 shows the example of the keyword map in the display screen of the document management system. The page, which is selected from the keyword map on the left side, appears on the right side, and keyword can be edited on the map also.

The present invention described above may be applied to a system with a plurality of computers, or a specific computer within a system. The object of the present invention can also be achieved by supplying a storage medium storing program codes of software for implementing the function of the above embodiment to a system or an apparatus, and reading out and executing the program codes stored in the storage medium by a computer (or a CPU or MPU) of the system or apparatus. In this case, the program codes read out from the storage medium implement the function of the present invention, and the storage medium storing these program codes comprises the invention. Also, besides the function of the above embodiment is implemented by executing the readout program codes by the computer, the present invention includes a case where an OS (Operating System) or the like running on the computer performs a part or the whole of actual processing in accordance with designations by the program codes and thereby implements the function of the above embodiment.

Furthermore, the present invention also includes a case where, after the program codes read out from the storage medium are written in a memory of a function extension board inserted into the computer or of a function extension unit connected to the computer, a CPU or the like of the function extension board or function extension unit performs a part or the whole of actual processing in accordance with designations by the program codes and thereby implements the function of the above embodiment.

Although the present invention has been described in its preferred form with a certain degree of particularity, many apparently widely different embodiments of the invention can be made without departing from the spirit and scope thereof. It is to be understood that the invention is not limited to the specific embodiments thereof except as defined in the appended claims.

### INDUSTRIAL APPLICABILITY

As explained above, an information processing method, apparatus, and a program of the present invention is appropriate for administration of information exist in an internet or intranet. A user can easily find out an objective document from a plurality of documents.

## Claims

1. An information processing method comprising:
an obtaining step of obtaining a predetermined type of tag data including respective titles corresponding to a plurality of documents;
a classification step of classifying the tag data; and
a menu displaying step of displaying a menu in which the tag data are displayed in a tree with placing the titles at the end of the tree and each document can be displayed in response to selection of the respective title.

2. The method according to Claim 1, wherein the plurality of documents are described in a markup language and the predetermined type of tag data is extracted from respective documents in the obtaining step.

3. The method according to Claim 1, wherein the predetermined type of tag data includes a keyword.

4. The method according to Claim 3, wherein the menu displays the keyword in a tree with placing the title at the end of the tree.

5. The method according to Claim 3, wherein if a plurality of keywords which belong to different branches are obtained from the same page, the title of the page is displayed corresponding to respective keywords.

6. The method according to Claim 3, wherein in the menu, a keyword corresponding to each document is displayed under a title of the document.

7. The method according to Claim 1, wherein each of the plurality of documents represents an FAQ.

8. The method according to Claim 1, further comprising a specifying step of specifying a file or a folder, and wherein documents belong to the file or the folder are set as the plurality of documents.

9. The method according to Claim 8, further comprising a format specifying step of specifying a file format to be specified in the file or the folder specified at the specifying step.

10. The method according to Claim 8, further comprising an exception format specifying step of specifying a file format to be excluded in the file or the folder specified at the specifying step.

11. The method according to Claim 8, further comprising a layer specifying step of specifying a layer to be specified in the file or the folder specified at the specifying step.

12. The method according to Claim 1, further comprising a designation step of designating an address in a network and wherein documents in the designated address set as the plurality of documents.

13. The method according to Claim 12, wherein if a document in the designated address has an external link, a linked document is included in the plurality of documents.

14. The method according to Claim 13, further comprising an exception link designation step of designating a link excluded from the plurality of documents.

15. The method according to Claim 12, wherein if a document in the designated address has an external link, a linked document is excluded from the plurality of documents.

16. The method according to Claim 12, further comprising a layer designation step of designating a depth of layer of a file to be designated in the designated address.

17. The method according to Claim 1, wherein the predetermined type of tag data includes user type and the menu displays other tag data under the user type.

18. The method according to Claim 1, further comprising an editing step of editing the menu.

19. The method according to Claim 18, wherein tag data can be edited in the editing step.

20. The method according to Claim 18, wherein node data can be edited in the editing step.

21. The method according to Claim 20, wherein a position of node data can be moved in the editing step.

22. The method according to Claim 1, wherein tag data are stored in database in correspondence with each of the plurality of documents and the predetermined type of tag data is obtained form the database.

23. The method according to Claim 22, further comprising a tag data setting step of setting the tag data in correspondence with a file by referencing with a tag knowledge base which stores knowledge of tag data.

24. The method according to Claim 1, wherein the method is carried out in response to a request from a client through a server.

25. The method according to Claim 1, wherein the tag data includes a type of public or private, and further comprising an access restriction step of restricting an access to private tag data.

26. The method according to Claim 1, wherein the plurality of documents are documents to be administrated in document management system.

27. The method according to Claim 26, wherein the system administrates documents in the internet displayed by a browser.

28. An information processing apparatus comprising:
obtaining means for obtaining a predetermined type of tag data including respective titles corresponding to a plurality of documents;
classification means for classifying the tag data; and
menu displaying means for displaying a menu in which the tag data are displayed in a tree with placing the titles at the end of the tree and each document can be displayed in response to selection of the respective title.

29. An information processing program executable by a computer comprising:
an obtaining step of obtaining a predetermined type of tag data including respective titles corresponding to a plurality of documents;
a classification step of classifying the tag data; and
a menu displaying step of displaying a menu in which the tag data are displayed in a tree with placing the titles at the end of the tree and each document can be displayed in response to selection of the respective title.
